# EUROPEAN PATENT APPLICATION

(11) **EP 2 709 198 A1**
(43) Date of publication of application: **19.03.2014**
(21) Application number: 12782768.1
(22) Date of filing: 04.04.2012
(51) Int. Cl.: H01M 8/02, F16J 15/10, H01M 8/10

(54) **POLYMER ELECTROLYTE FUEL CELL AND METHOD FOR PRODUCING SAME**

(30) Priority: 12.05.2011 JP 2011107444
(71) Applicant: Panasonic Corporation, Kadoma-shi, Osaka 571-8501 (JP)
(72) Inventor: OKANISHI, Takeou, Osaka 540-6207 (JP); YAMAUCHI, Masaki, Osaka 540-6207 (JP); SUGAWARA, Yasushi, Osaka 540-6207 (JP); TSUJI, Yoichiro, Osaka 540-6207 (JP)
(74) Representative: Grünecker, Kinkeldey, Stockmair & Schwanhäusser
(86) International application number: PCT/JP2012/002363
(87) International publication number: WO 2012/153453

(57) **Abstract**

A polymer electrolyte fuel cell includes: a sealing structure (9) including a substantially rectangular ring-shaped first gasket portion (9a) and a substantially rectangular ring-shaped second gasket portion (9b), the first gasket portion (9a) being positioned outward of a peripheral portion of a first gas diffusion layer (5) and between a first separator (7) and a first catalyst layer (2) positioned at a peripheral portion of a polymer electrolyte membrane 1, the second gasket portion (9b) being positioned outward of the peripheral portion of the polymer electrolyte membrane (1) and between the first separator (7) and a second separator (8); and at least the first catalyst layer (2), a second catalyst layer (3), and a swellable resin portion (11) formed of a swellable resin whose volume expands when water is added thereto, the swellable resin portion (11) being positioned between the first gasket portion (9a) and the first catalyst layer (2) positioned at the peripheral portion of the polymer electrolyte membrane (1).

## Description

### Technical Field

The present invention relates to a polymer electrolyte fuel cell and a method of fabricating the same.

### Background Art

Polymer electrolyte fuel cells are configured to supply a fuel gas such as hydrogen and an oxidation gas such as air to gas diffusion electrodes each including a catalyst layer containing, for example, platinum, and to cause the fuel gas and the oxidation gas to electrochemically react with each other, thereby generating electricity and heat. Generally speaking, such a polymer electrolyte fuel cell is configured such that a pair of catalyst layers, each of which is formed by mixing carbon powder supporting a platinum-based metal catalyst with a polymer electrolyte having hydrogen ion conductivity, are formed on both respective surfaces of a polymer electrolyte membrane which transports hydrogen ions. The polymer electrolyte membrane and the catalyst layers are integrated together, and such a single unit is called a catalyst coated membrane. In addition, a pair of gas diffusion layers having both gas permeability and electron conductivity are formed at the outside of the catalyst layers. For example, water repellent-treated carbon paper is used as the gas diffusion layers. The catalyst layers combined with the gas diffusion layers are collectively called gas diffusion electrodes. The gas diffusion electrodes and the polymer electrolyte membrane are integrated together, and such a single unit is called a membrane-electrode assembly (MEA).

Regarding the fabrication of the membrane-electrode assembly, from the standpoint of mass productivity, attempts have been made to use a roll to roll process to fabricate a catalyst coated membrane in which a catalyst layer coating is formed on one or both surfaces of an electrolyte membrane.

Specifically, the roll to roll process is a process where: while an electrolyte membrane is being unwound from a roll of the electrolyte membrane alone, or from a roll of the electrolyte membrane that is laminated with a reinforcing substrate film, and rolled up around another roll, a catalyst layer is continuously formed on the electrolyte membrane. As one example, there is a known catalyst layer forming process where an elongated catalyst transfer sheet, which is a substrate sheet with a catalyst layer formed thereon, is thermocompression bonded to an elongated electrolyte membrane which is being unwound and moved from a roll, and thereafter the substrate sheet is detached from the catalyst transfer sheet, and thus the catalyst layer is continuously transferred onto the electrolyte membrane (see Patent Literature 1, for example). There is another known process of forming a catalyst layer on an electrolyte membrane. The process includes: a coating step such as spray coating, die coating, or screen printing; a drying step in which a coated membrane is dried by being pressed onto a heated roller or by being exposed to hot air; and a rolling-up step in which an electrolyte membrane with a catalyst layer formed thereon is rolled up around another roll. In these processes, the steps proceed in sequence, and thereby an elongated catalyst coated membrane can be fabricated with high productivity at low cost. In order to fabricate the elongated catalyst coated membrane at low cost by the latter process, the processing speed in the coating step is a crucial factor which most greatly affects the operating efficiency. Therefore, rather than the screen printing which is an intermittently performed coating method, the spray coating or die coating which performs continuous coating without leaving uncoated portions in the rolling-up direction is more suitable to improve productivity. Moreover, although intermittently performed coating is desirable in terms of efficient usage of a catalyst forming material, it is highly difficult to perform the coating such that the beginning and end edges of the coated surface with respect to the advancing direction of the electrolyte membrane are formed as straight edges. For this reason, in general, an elongated catalyst coated membrane is fabricated through continuous coating. Therefore, the following method is commonly used: an elongated catalyst coated membrane having a catalyst layer formed thereon with strip-shaped margins left at both sides is cut in the width direction to cut out a piece of catalyst coated membrane (hereinafter, simply referred to as a catalyst coated membrane) including the margins as gas seal regions around power generation portions; and the catalyst coated membrane is incorporated into a fuel cell.

### Citation List

### Patent Literature

PTL 1: Japanese Laid-Open Patent Application Publication No. 2010-182563

### Summary of Invention

### Technical Problem

However, there is a problem that a fuel cell system using such a catalyst coated membrane that is cut out from an elongated catalyst coated membrane fabricated through the roll to roll process is insufficient in terms of durability.

An object of the present invention is to provide a polymer electrolyte fuel cell and a fabrication method thereof, which solve the above problem and realize sufficient durability even with the use of a catalyst coated membrane fabricated through the roll to roll process.

### Solution to Problem

In order to solve the above-described problem, a polymer electrolyte fuel cell according to one aspect of the present invention includes: a substantially rectangular polymer electrolyte membrane with a pair of first and second main surfaces; a substantially rectangular first catalyst layer facing the first main surface, the first catalyst layer extending so as to cover a peripheral portion of the polymer electrolyte membrane at, at least, one side of the polymer electrolyte membrane when seen in a thickness direction of the polymer electrolyte membrane; a substantially rectangular second catalyst layer facing the second main surface; a substantially rectangular first gas diffusion layer which is, when seen in a perpendicular direction to the thickness direction, positioned at an opposite side to the polymer electrolyte membrane with respect to the first catalyst layer which is interposed between the first gas diffusion layer and the polymer electrolyte membrane, and when seen in the thickness direction, extends so as to cover a portion of the first catalyst layer, the portion extending inward from a peripheral portion of the first catalyst layer; a substantially rectangular second gas diffusion layer which is, when seen in the perpendicular direction, positioned at an opposite side to the polymer electrolyte membrane with respect to the second catalyst layer which is interposed between the second gas diffusion layer and the polymer electrolyte membrane, and when seen in the thickness direction, extends so as to cover a portion of the second catalyst layer, the portion extending inward from a peripheral portion of the second catalyst layer; a substantially rectangular first separator disposed such that, when seen in the perpendicular direction, the first separator is positioned at an opposite side to the polymer electrolyte membrane with respect to the first gas diffusion layer which is interposed between the first separator and the polymer electrolyte membrane, and a peripheral portion of the first separator is positioned outward of the peripheral portion of the polymer electrolyte membrane when seen in the thickness direction; a substantially rectangular second separator disposed such that, when seen in the perpendicular direction, the second separator is positioned at an opposite side to the polymer electrolyte membrane with respect to the second gas diffusion layer which is interposed between the second separator and the polymer electrolyte membrane, and a peripheral portion of the second separator is positioned outward of the peripheral portion of the polymer electrolyte membrane when seen in the thickness direction; a sealing structure including a first gasket portion and a second gasket portion, the first gasket portion being substantially rectangular ring-shaped and, when seen in the thickness direction, positioned outward of a peripheral portion of the first gas diffusion layer, and when seen in the perpendicular direction, positioned between the first separator and the peripheral portion of the polymer electrolyte membrane or between the first separator and the first catalyst layer positioned at the peripheral portion of the polymer electrolyte membrane, the second gasket portion being substantially rectangular ring-shaped and, when seen in the thickness direction, positioned outward of the peripheral portion of the polymer electrolyte membrane, and when seen in the perpendicular direction, positioned between the first separator and the second separator; and a first swellable resin portion formed of a swellable resin whose volume expands when water is added thereto, the first swellable resin portion being, when seen in the perpendicular direction, positioned between the first gasket portion and the first catalyst layer positioned at the peripheral portion of the polymer electrolyte membrane.

The sealing structure may further include a third gasket portion which is substantially rectangular ring-shaped and, when seen in the thickness direction, positioned outward of a peripheral portion of the second gas diffusion layer, and when seen in the perpendicular direction, positioned between the second separator and the peripheral portion of the polymer electrolyte membrane or between the second separator and the second catalyst layer positioned at the peripheral portion of the polymer electrolyte membrane. The polymer electrolyte fuel cell may include a second swellable resin portion formed of a swellable resin whose volume expands when water is added thereto. The second swellable resin portion is, when seen in the perpendicular direction, positioned between the third gasket portion and the second catalyst layer positioned at the peripheral portion of the polymer electrolyte membrane.

The above polymer electrolyte fuel cell may further include a third swellable resin portion formed of a swellable resin whose volume expands when water is added thereto. The third swellable resin portion covers an edge of the first catalyst layer, an edge of the polymer electrolyte membrane, and an edge of the second catalyst layer when seen in the perpendicular direction. The first swellable resin portion, the second swellable resin portion, and the third swellable resin portion may be integrally formed together.

The swellable resin may contain at least one resin selected from the group consisting of starch-based resins, cellulosic resins, polysaccharides, polyvinyl alcohol-based resins, acrylic acid-based resins, acrylamide-based resins, fluorine-based sulfonic acid resins, and hydrocarbon-based sulfonic acid resins.

The swellable resin may contain at least one resin selected from the group consisting of acrylonitrile graft polymers, acrylic acid graft copolymers, acrylamide graft polymers, cellulose-acrylonitrile graft polymers, cross-linked carboxymethylcellulose, hyaluronic acid, cross-linked polyvinyl alcohol, polyvinyl alcohol hydrogel frozen/thawed elastomers, sodium acrylate/vinyl alcohol copolymers, cross-linked sodium polyacrylate, cross-linked N-substituted acrylamides, fluorine-based sulfonic acid resins, and hydrocarbon-based sulfonic acid resins.

The first catalyst layer and the second catalyst layer may extend so as to cover the peripheral portion of the polymer electrolyte membrane at four sides, or at two opposite sides, of the polymer electrolyte membrane.

The sealing structure may include: a first gasket configured as the first gasket portion, which is substantially rectangular ring-shaped and, when seen in the thickness direction, positioned outward of the peripheral portion of the first gas diffusion layer, and when seen in the perpendicular direction, positioned between the first separator and the peripheral portion of the polymer electrolyte membrane or between the first separator and the first catalyst layer positioned at the peripheral portion of the polymer electrolyte membrane; and a second gasket configured as the second gasket portion, which is substantially rectangular ring-shaped and, when seen in the thickness direction, positioned outward of the peripheral portion of the polymer electrolyte membrane, and when seen in the perpendicular direction, positioned between the first separator and the second separator.

The sealing structure may further include a third gasket configured as the third gasket portion, which is substantially rectangular ring-shaped and, when seen in the thickness direction, positioned outward of a peripheral portion of the second gas diffusion layer, and when seen in the perpendicular direction, positioned between the second separator and the peripheral portion of the polymer electrolyte membrane or between the second separator and the second catalyst layer positioned at the peripheral portion of the polymer electrolyte membrane.

The sealing structure may be configured as a single frame-like gasket including: the first gasket portion which is substantially rectangular ring-shaped and, when seen in the thickness direction, positioned outward of the peripheral portion of the first gas diffusion layer, and when seen in the perpendicular direction, positioned between the first separator and the peripheral portion of the polymer electrolyte membrane or between the first separator and the first catalyst layer positioned at the peripheral portion of the polymer electrolyte membrane; the second gasket portion which is substantially rectangular ring-shaped and, when seen in the thickness direction, positioned outward of the peripheral portion of the polymer electrolyte membrane, and when seen in the perpendicular direction, positioned between the first separator and the second separator; and a first connecting portion connecting the first gasket portion and the second gasket portion.

The frame-like gasket may further include: the third gasket portion which is substantially rectangular ring-shaped and, when seen in the thickness direction, positioned outward of a peripheral portion of the second gas diffusion layer, and when seen in the perpendicular direction, positioned between the second separator and the peripheral portion of the polymer electrolyte membrane or between the second separator and the second catalyst layer positioned at the peripheral portion of the polymer electrolyte membrane; and a second connecting portion connecting the third gasket portion and the second gasket portion.

A polymer electrolyte fuel cell fabrication method according to one aspect of the present invention is a method of fabricating the above polymer electrolyte fuel cell, the method including, in a catalyst coated membrane which includes the polymer electrolyte membrane and the first catalyst layer, disposing the swellable resin on the first catalyst layer positioned at the peripheral portion of the polymer electrolyte membrane.

The method may include, after the disposing, heating a peripheral portion of the catalyst coated membrane, on which peripheral portion at least the swellable resin is disposed. The heating may be performed at such a temperature as to soften the swellable resin but not to decompose a polymer electrolyte contained in the polymer electrolyte membrane.

### Advantageous Effects of Invention

The present invention is configured as described above and achieves an advantageous effect of being able to provide a polymer electrolyte fuel cell and a fabrication method thereof, which realize sufficient durability even with the use of a catalyst coated membrane fabricated through a roll to roll process.

### Brief Description of Drawings

[Fig. 1] Fig. 1 is a cross-sectional view showing an example of a schematic configuration of a main part of a polymer electrolyte fuel cell according to Embodiment 1.
[Fig. 2] Fig. 2 is a front view showing an example of a first separator of the polymer electrolyte fuel cell of Fig. 1.
[Fig. 3] Fig. 3 is a rear view showing the example of the first separator of the polymer electrolyte fuel cell of Fig. 1.
[Fig. 4] Fig. 4 is a cross-sectional view showing an example of a schematic configuration of a main part of a polymer electrolyte fuel cell according to Variation 1 of Embodiment 1.
[Fig. 5] Fig. 5 is a front view showing an example of a first separator of the polymer electrolyte fuel cell of Fig. 4.
[Fig. 6] Fig. 6 is a cross-sectional view showing an example of a schematic configuration of a main part of a polymer electrolyte fuel cell according to Embodiment 2 of the present invention.
[Fig. 7] Fig. 7 is a cross-sectional view showing an example of a schematic configuration of a main part of a polymer electrolyte fuel cell according to Variation 2 of Embodiment 2.
[Fig. 8] Fig. 8 is a cross-sectional view showing an example of a schematic configuration of a main part of a polymer electrolyte fuel cell according to Variation 3 of Embodiment 2.
[Fig. 9] Fig. 9 is a cross-sectional view showing an example of a schematic configuration of a main part of a polymer electrolyte fuel cell according to Variation 4 of Embodiment 2.
[Fig. 10] Fig. 10 is a cross-sectional view showing an example of a schematic configuration of a main part of a polymer electrolyte fuel cell according to Variation 5 of Embodiment 2.
[Fig. 11] Fig. 11 is a cross-sectional view showing an example of a schematic configuration of a main part of a polymer electrolyte fuel cell according to Embodiment 3.
[Fig. 12] Fig. 12 is a plan view showing an example of a manner in which catalyst layers of a catalyst coated membrane are formed.
[Fig. 13] Fig. 13 is a plan view showing an example of a manner in which edges of the catalyst layers are formed at a side of a polymer electrolyte membrane of the catalyst coated membrane, the side having a margin.
[Figs. 14A and 14B] Figs. 14A and 14B are perspective views each schematically showing an example of the manner of cutting out a piece of catalyst coated membrane from an elongated catalyst coated membrane fabricated through a roll to roll process.
[Fig. 15] Fig. 15 is a main part cross-sectional view schematically showing a configuration of a prototype fuel cell which was fabricated in the course of the development of a fuel cell of the present invention.
[Fig. 16] Fig. 16 is a graph showing durability test results regarding the prototype and a comparative product.

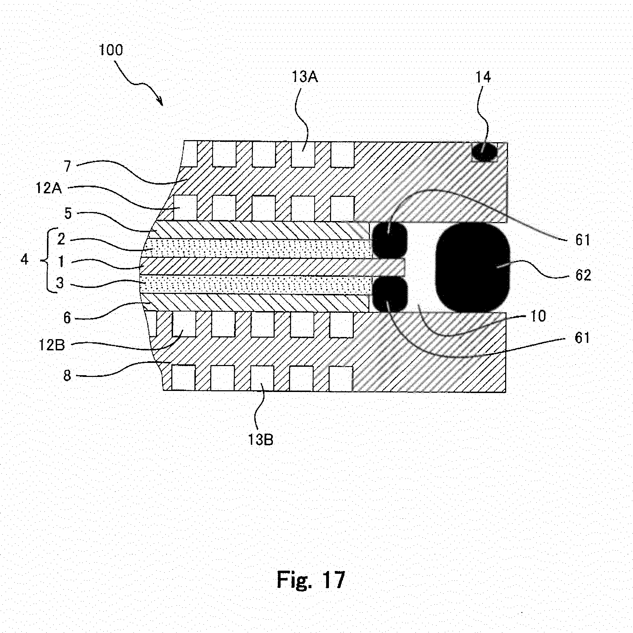

[Fig. 17] Fig. 17 is a schematic cross-sectional view showing a main part of a fuel cell used as the comparative product.
[Figs. 18A to 18C] Figs. 18A, 18B, and 18C are Tables 1 to 3 showing conditions and results of comparative experiments.

### Description of Embodiments

### (Findings on Which the Present Invention is Based)

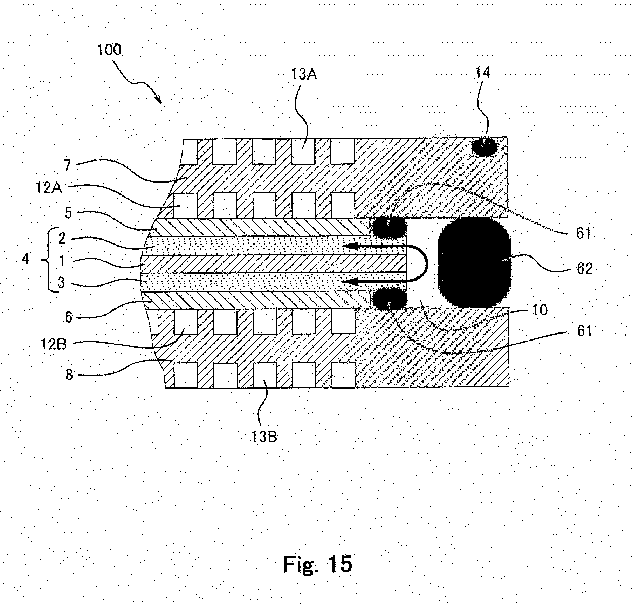

Fig. 15 is a main part schematic cross-sectional view schematically showing a configuration of a prototype fuel cell which was fabricated in the course of the development of a fuel cell of the present invention.

As shown in Fig. 15, a catalyst coated membrane 4, cut out from an elongated catalyst coated membrane fabricated through a continuous coating process, is sandwiched on both sides by a first gas diffusion layer 5 and a second gas diffusion layer 6 each having gas diffusion and current collecting functions, and is further sandwiched on both sides by a first separator 7 and a second separator 8. Each of the first and second separators has a surface provided with reaction gas channels, the surface facing a corresponding one of the gas diffusion layers. In this manner, a single cell is formed. The single cell is sandwiched on both sides by a pair of current collectors, a pair of insulating plates, and a pair of end plates, which are sequentially arranged (not shown), and these components are fastened together with suitable pressure. In this manner, a single-cell battery is formed. The size of the pair of gas diffusion layers 5 and 6 when seen in the thickness direction is adjusted to be smaller than the size of the catalyst coated membrane 4. Accordingly, when the catalyst coated membrane 4 is sandwiched by the pair of gas diffusion layers 5 and 6, the peripheral portion of the catalyst coated membrane 4 is exposed at the outer periphery of the pair of gas diffusion layers 5 and 6. The single-cell battery is configured such that a pair of inner gaskets 61 are disposed at both respective sides of the peripheral portion of the catalyst coated membrane 4 in order to prevent gas leakage from the reaction gas channels to the outside of the single-cell battery. Further, an outer gasket 62 is disposed between the peripheral portions of the pair of separators 7 and 8 in order to prevent moisture from evaporating from the end faces of a polymer electrolyte membrane 1.

By adopting the above configuration, a fuel cell using the catalyst coated membrane 4 fabricated through a roll to roll process can be realized. By using the catalyst coated membrane 4 which is fabricated at low cost through such a highly productive process, low-cost and stable-quality fuel cells can be manufactured.

However, as previously mentioned, the performance of such fuel cells using the catalyst coated membrane 4 is not sufficient.

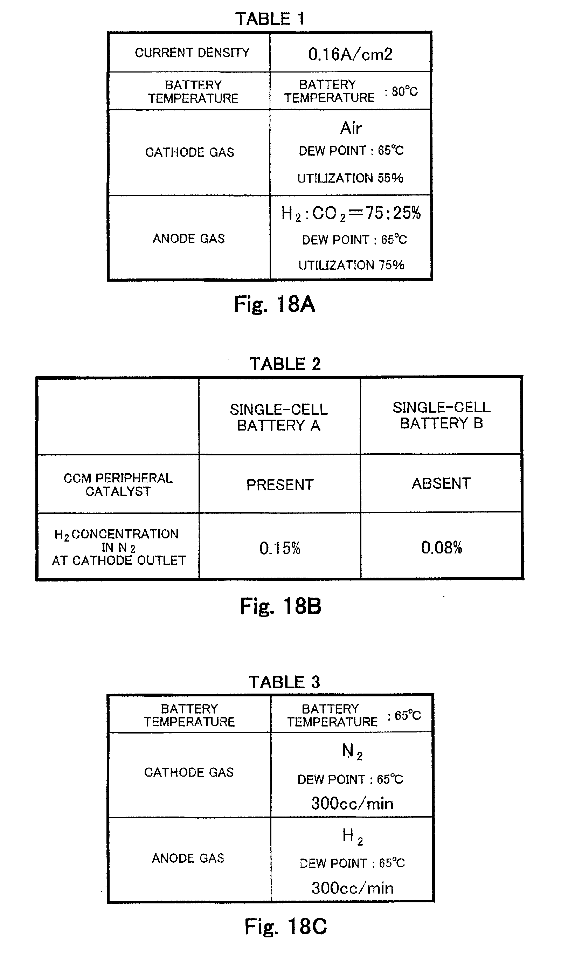

Fig. 16 shows durability test results from a first preliminary experiment in which two types of batteries A and B were operated under test conditions shown in Table 1 of Fig. 18A.

The method of experiment used in the first preliminary experiment is described below.

The battery A is a single-cell battery using the catalyst coated membrane 4, in which the catalyst layers are formed to reach the peripheral portion of the electrolyte membrane. The battery A corresponds to the prototype shown in Fig. 22. A roll-type polymer electrolyte membrane (Nafion (registered trademark) NRE-212) with a thickness of 50 µm and a width of 100 mm, laminated on a PET substrate, was used as a material to form the polymer electrolyte membrane of the battery A. A catalyst TEC10E50E available from Tanaka Kikinzoku Kogyo K.K. and Nafion (registered trademark) 10 wt. % dispersion available from Du Pont were agitated and mixed together by ultrasonic agitation and mixing, and thereby a catalyst ink was prepared, in which a carbon/ionomer ratio was 1.0 and a solid content was 18 wt. %. The ink was used as a material to form the catalyst layers of the battery A. A polymer electrolyte membrane unwound from a roll was continuously coated with the ink through die coating, such that a catalyst layer having a width of 90 mm and containing 0.6 mg/cm² of Pt was formed as shown in Fig. 21. After the coating, the polymer electrolyte membrane with one surface coated with the catalyst (CCM: Catalyst Coated Membrane) was quickly dried in a drying oven. Thereafter, the PET substrate was delaminated from the back coating surface, and a PET substrate was laminated on the dried coated surface and the membrane was rolled up. Next, the uncoated surface was continuously coated with the same ink, such that a catalyst layer having a width of 90 mm and containing 0.6 mg/cm² of Pt was formed. Then, the membrane was dried.

Next, the CCM having both surfaces coated with the respective catalyst layers was punched by a punching die of 65 mm x 65 mm, so that the central portions of the catalyst layers of the CCM were cut out as shown in Fig. 21A. In this manner, a catalyst coated membrane was formed, in which the catalyst layers covered the polymer electrolyte membrane to the edges.

The gas diffusion layers 5 and 6 were fabricated in the following manner: carbon paper TGP-H-120 (having a thickness of 360 µm) available from Toray Industries, Inc. was impregnated with Polyflon PTFE D-1E available from Daikin Industries, Ltd., such that the weight ratio of PTFE became 20 wt. % when dried; thereafter, the carbon paper was dried and then calcined for water repellent finishing; and the carbon paper was punched by a punching die of 60 mm x 60 mm. A rectangular fluorine rubber sealing material with a rectangular central hole formed therein (having a width of 2 mm, an inner size of 60 mm x 60 mm, an outer size of 64 mm x 64 mm, and a thickness of 450 µm), which was formed by molding trial, was used as a material to form each of the inner gaskets 61. A rectangular fluorocarbon resin sealing material with a rectangular central hole formed therein (having a width of 2 mm, an inner size of 67 mm x 67 mm, an outer size of 71 mm x 71 mm, and a thickness of 0.9 mm), which was formed by molding trial, was used as a material to form the outer gasket 62. A glassy carbon material (120 mm x 120 mm, having a thickness of 5 mm) was used as a material to form each of the separators 7 and 8. The width and depth of each gas channel to be formed were set to 1 mm, and five channels in a serpentine shape were formed by cutting in a portion (60 mm x 60 mm) of each separator, the portion serving as a power generation region and contacting a corresponding one of the gas diffusion layers. The battery A was configured such that the pair of inner gaskets 61 sandwich the catalyst coated membrane 4.

The battery B is a fuel cell which was fabricated as a comparative product for use in comparison with the battery A. Fig. 24 shows a schematic cross section of a main part of the battery B. The battery B is formed in the same manner as the battery A (in terms of the materials, size, shape, etc.) except that, in the battery B, catalyst layers are formed so as not to reach the peripheral portion of the polymer electrolyte membrane 1, and the polymer electrolyte membrane 1 is exposed at the peripheral portion of the catalyst coated membrane 4. Specifically, a PET substrate masking sheet with a rectangular opening of 60 mm x 60 mm was laminated on one of the surfaces of a roll-type polymer electrolyte membrane, and then catalyst layer coating was performed on the one surface. In this manner, a rectangular catalyst layer of 60 mm x 60 mm was fabricated. Thereafter, the catalyst layer coating was also performed on the other surface, so that a catalyst layer was formed at the opposite side to the previously formed catalyst layer in such a manner that these catalyst layers sandwiched the membrane. Then, the membrane was dried, and thus a CCM was obtained. The CCM was punched by a punching die of 65 mm x 65 mm, with the rectangular catalyst layers positioned at the center. Then, the masking sheets were removed. In this manner, the catalyst coated membrane, the catalyst layers of which do not cover the peripheral portion of the polymer electrolyte membrane, was formed. Then, a portion of the polymer electrolyte membrane 1, the portion being exposed at the peripheral portion of the catalyst coated membrane, was sandwiched by the pair of inner gaskets 61. The shapes and materials of the gas diffusion layers 5 and 6, the inner gaskets 61, and the outer gasket 62 were the same as in the battery A.

In the experiment, ten cells were stacked to form a cell stack, and electric power generation was performed with the stack under the conditions shown in Table 1. Then, voltage decrease was monitored. Also, moisture in exhaust gas discharged from both electrodes of the stack was collected and a fluorine release rate (FRR, [µg/cm²/day]) was measured by ion chromatography with ion chromatography equipment (DIONEX ICS-90).

In the battery B, the fluorine release rate in the exhaust gas, which serves as a degradation index indicative of degradation in the polymer electrolyte membrane 1, was 0.1 µg/cm²/day. On the other hand, in the battery A, the fluorine release rate was 20 µg/cm²/day from an early stage, which was approximately 200 times greater than in the battery A, and thereafter the fluorine release rate increased at an accelerated pace. In the battery B, voltage decrease did not occur even after elapse of 1300 hours. On the other hand, in the battery A, a through-hole was formed in the polymer electrolyte membrane 1 after approximately 1000 hours, and the battery A became unable to generate electric power.

The inventors of the present invention examined the reasons for such insufficient performance of the battery A, and obtained findings described below.

Specifically, the inventors have found out that, in a fuel cell configured in the same manner as the prototype, the inner gaskets 61 which press on the catalyst layers do not completely prevent reaction gases from leaking from the reaction gas channels through the catalyst layers 2 and 3 (hereinafter, reaction gas leakage through the catalyst layers includes the meaning of both reaction gas leakage through the inside of the catalyst layers and reaction gas leakage through the interface between a catalyst layer and a gasket), and that the reaction gases leaking through the pair of catalyst layers 2 and 3 flow through space that is defined by the edge of the catalyst coated membrane 4, the pair of inner gaskets 61, the outer gasket 62, the first separator 7, and the second separator 8, such that the leaking reaction gases form a C-shaped leakage flow in which the gases are mixed together (hereinafter, this phenomenon is referred to as "C leak". These findings allowed the inventors to conceive of the present invention.

Table 2 in Fig. 25B shows measurement results of a second preliminary experiment, in which the amount of leakage of H₂ into N₂ at the cathode outlet was measured by a gas chromatograph.

The method of experiment used in the second preliminary experiment is described below.

The catalyst coated membrane 4 in which the catalyst layers 2 and 3 are formed to reach the peripheral portion of the catalyst coated membrane 4 was used in a single-cell battery A. Meanwhile, the catalyst coated membrane 4 used in a single-cell battery B was formed in the following manner: a masking sheet with an opening formed therein was affixed to the polymer electrolyte membrane 1 in advance of performing catalyst layer coating; and the masking sheet was removed after the catalyst layer coating, so that the catalyst layers 2 and 3 were formed to have the same size as the gas diffusion layers 5 and 6 and the electrolyte membrane was exposed at the peripheral portion of the catalyst coated membrane 4. Since the materials, sizes, shapes, and the like of the respective components are the same as in the first preliminary experiment, a detailed description of such components will be omitted.

Regarding each of the single-cell batteries A and B thus obtained, the amount of leakage of H₂ into N₂ at the cathode outlet was measured by a gas chromatograph (GC-8A available from Shimadzu Corporation) under gas leakage test conditions shown in Table 3 of Fig. 25C. The method actually used for the measurement was as follows: humidified N₂ and H₂ in the same amount were flowed through the cathode and the anode, respectively; and the H₂ concentration in N₂ flowing through the cathode was measured by using gas chromatography. In this manner, the amount of H₂ that passed from the anode to the cathode through the polymer electrolyte membrane 1 was measured.

Originally, the polymer electrolyte membrane 1 allows H₂ in a very small amount to pass through. However, in the single-cell battery A using the catalyst coated membrane 4 in which the catalyst layers 2 and 3 were formed to reach the peripheral portion of the catalyst coated membrane 4, the amount of H₂ that passed through the polymer electrolyte membrane 1 was approximately twice as much as in the single-cell battery B.

C leak, which is caused due to gas leakage through the catalyst layers 2 and 3 sandwiched by the inner gaskets 61, hinders normal power generation reactions at the catalyst layers 2 and 3, causes production of hydrogen peroxide, and accelerates a reaction that generates radicals causing electrolyte degradation. This causes a problem that degradation and decomposition of the electrolyte in the polymer electrolyte membrane 1 and the catalyst layers 2 and 3 are accelerated, which is considered to result in degradation of the power generation performance and durability of the fuel cell. It should be noted that the irregularity of the catalyst layer surface is significant, which is known from, for example, Japanese Laid-Open Patent Application Publication No. 2004-134392. It is considered that the interface between a catalyst layer and a gasket acts as a major passage for a leaking reaction gas.

The inventors of the present invention have arrived at the idea that, in the fuel cell using the catalyst coated membrane 4 fabricated through a roll to roll process, "C leak" can be prevented by disposing a swellable resin portion between the peripheral portion of the catalyst coated membrane 4 and the inner gaskets 61, the swellable resin portion being formed of a swellable resin whose volume expands when water is added thereto. As a result, the inventors have conceived of the present invention.

Hereinafter, embodiments of the present invention will be described with reference to the accompanying drawings. In the drawings, the same or corresponding components are denoted by the same reference signs, and a repetition of the same description is avoided.

### (Embodiment 1)

### [Configuration]

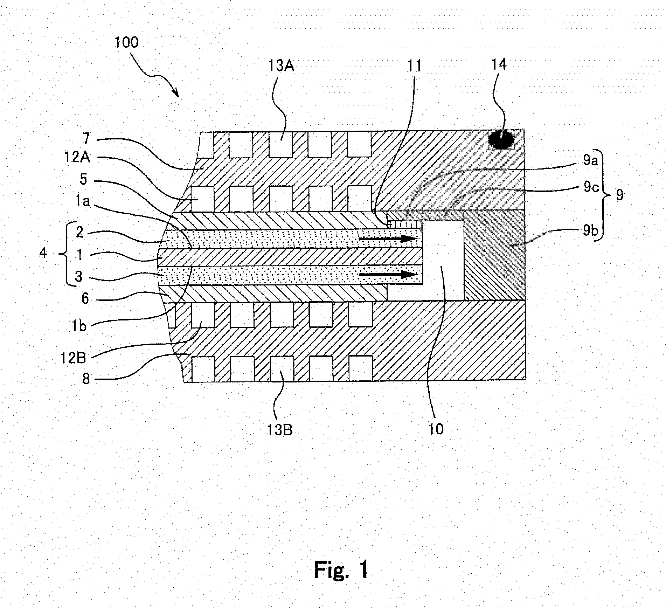

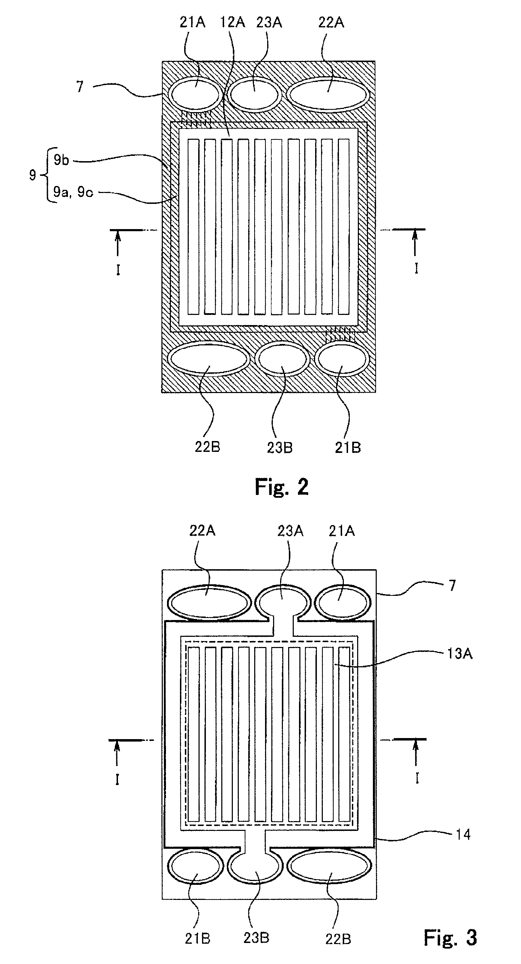

Fig. 1 is a cross-sectional view showing an example of a schematic configuration of a main part of a polymer electrolyte fuel cell according to Embodiment 1. Fig. 2 is a front view showing an example of a first separator of the polymer electrolyte fuel cell of Fig. 1. Fig. 3 is a rear view showing the example of the first separator of the polymer electrolyte fuel cell of Fig. 1. Fig. 1 shows a cross section along line I-I of Fig. 2 and Fig. 3. It should be noted that since these diagrams are schematic diagrams, the cross-sectional view (Fig. 1) of the polymer electrolyte fuel cell, the front view (Fig. 2) of the separator, and the rear view (Fig. 3) of the separator are inconsistent with each other in terms of, for example, the positions and shapes of passages. The same is true for the other embodiments and variations. Since the fundamental configuration of the polymer electrolyte fuel cell 100 is well known, the description below describes components related to the present invention and the description of the other components is omitted. Moreover, in the description below, when components related to the anode and cathode are described, whether the anode side is described or the cathode side is described is not specified unless necessary.

As shown in Fig. 1 to Fig. 3, the polymer electrolyte fuel cell 100 according to Embodiment 1 includes: the polymer electrolyte membrane 1; the first catalyst layer 2; the second catalyst layer 3; the first gas diffusion layer 5; the second gas diffusion layer 6; the first separator 7; the second separator 8; a sealing structure 9, and a swellable resin portion 11 (first swellable resin portion). Fig. 1 shows a single cell as a main part of the polymer electrolyte fuel cell 100. For example, the polymer electrolyte fuel cell 100 is configured in the following manner: a pair of current collectors, a pair of insulating plates, and a pair of end plates (which are not shown) are sequentially arranged at both sides (both ends) of the single cell or a cell stack in which a plurality of the single cells are stacked; and these components are fastened together by fasteners (not shown) with suitable pressure.

The polymer electrolyte membrane 1 is formed in a substantially rectangular shape, and has a pair of a first main surface 1a and a second main surface 1b. In the present invention, the term "rectangular" in the wording "substantially rectangular" includes rectangle and square. The polymer electrolyte membrane 1 is a polymer membrane having hydrogen ion conductivity. The material of the polymer electrolyte membrane 1 is not particularly limited, so long as the material selectively transports hydrogen ions. Examples of the polymer electrolyte membrane 1 include fluorine-based polymer electrolyte membranes formed of perfluorocarbon sulfonic acid (e.g., Nafion (registered trademark) available from DuPont, USA; Aciplex (registered trademark) available from Asahi Kasei Corporation; and Flemion (registered trademark) available from Asahi Glass Co., Ltd.) and various hydrocarbon-based electrolyte membranes.

Each of the first catalyst layer 2 and the second catalyst layer 3 is substantially rectangular. The first catalyst layer 2 and the second catalyst layer 3 are opposed to each other with the polymer electrolyte membrane 1 interposed between them, such that the first catalyst layer 2 and the second catalyst layer 3 extend so as to cover the peripheral portion of the polymer electrolyte membrane 1 at, at least, one side of the polymer electrolyte membrane 1. The manner of forming the first catalyst layer 2 and the second catalyst layer 3 on the polymer electrolyte membrane 1 will be described below in detail. The first catalyst layer 2 is disposed at the outside of the first main surface 1a of the polymer electrolyte membrane 1 (so as to face the first main surface 1a), and the second catalyst layer 3 is disposed at the outside of the second main surface 1b of the polymer electrolyte membrane 1 (so as to face the second main surface 1b). One of the first catalyst layer 2 and the second catalyst layer 3 is an anode catalyst layer, and the other is a cathode catalyst layer. It should be noted that the term "outside" here refers to two directions away from the polymer electrolyte membrane 1, the two directions extending in the thickness direction of the polymer electrolyte membrane 1 (hereinafter, simply referred to as a "thickness direction") from the plane formed by the polymer electrolyte membrane 1.

Each of the first catalyst layer 2 and the second catalyst layer 3 is a layer containing a catalyst catalyzing an oxidation-reduction reaction of hydrogen or oxygen. The material of each of the first catalyst layer 2 and the second catalyst layer 3 is not particularly limited, so long as the material is electrically conductive and capable of catalyzing oxidation-reduction reactions of hydrogen and oxygen. For example, each of the first catalyst layer 2 and the second catalyst layer 3 is formed as a porous member, the main components of which are: carbon powder supporting a platinum-group metal catalyst; and a polymer material having proton conductivity. The proton-conductive polymer material used for the first catalyst layer 2 and the second catalyst layer 3 may be of the same kind as or different kind from a proton-conductive polymer material used for the polymer electrolyte membrane 1. The polymer electrolyte membrane 1, the first catalyst layer 2, and the second catalyst layer 3 form the catalyst coated membrane 4.

The first gas diffusion layer 5 is substantially rectangular and disposed outside the first catalyst layer 2 (i.e., when seen in a direction perpendicular to the thickness direction (hereinafter, simply referred to as a "perpendicular direction"), disposed at the opposite side to the polymer electrolyte membrane 1 with respect to the first catalyst layer 2 which is interposed between the first gas diffusion layer 5 and the polymer electrolyte membrane 1) such that, when seen in the thickness direction, the first gas diffusion layer 5 extends so as to cover a portion of the first catalyst layer 2, the portion extending inward from the peripheral portion of the first catalyst layer 2. The second gas diffusion layer 6 is substantially rectangular and disposed outside the second catalyst layer 3 (i.e., when seen in the perpendicular direction, disposed at the opposite side to the polymer electrolyte membrane 1 with respect to the second catalyst layer 3 which is interposed between the second gas diffusion layer 6 and the polymer electrolyte membrane 1) such that, when seen in the thickness direction, the second gas diffusion layer 6 extends so as to cover a portion of the second catalyst layer 3, the portion extending inward from the peripheral portion of the second catalyst layer 3.

The first gas diffusion layer 5 serves as an anode gas diffusion layer when the first catalyst layer 2 serves as an anode catalyst layer. Alternatively, the first gas diffusion layer 5 serves as a cathode gas diffusion layer when the first catalyst layer 2 serves as a cathode catalyst layer. The second gas diffusion layer 6 serves as a cathode gas diffusion layer when the second catalyst layer 3 serves as a cathode catalyst layer. Alternatively, the second gas diffusion layer 6 serves as an anode gas diffusion layer when the second catalyst layer 3 serves as an anode catalyst layer. The anode catalyst layer and the anode gas diffusion layer form an anode (anode gas diffusion electrode), and the cathode catalyst layer and the cathode gas diffusion layer form a cathode (cathode gas diffusion electrode). The catalyst coated membrane 4, the first gas diffusion layer 5, and the second gas diffusion layer 6 form a membrane-electrode assembly (MEA).

Each of the first gas diffusion layer 5 and the second gas diffusion layer 6 is a porous plate-shaped electrically conductive component. The material of the gas diffusion layers 5 and 6 is not particularly limited, so long as the material is electrically conductive and capable of diffusing a reaction gas.

In order for the gas diffusion layers 5 and 6 to have gas permeability, a porous and electrically conductive base material formed by using, for example, fine carbon powder, pore-forming material, carbon paper, or carbon cloth may be used for the gas diffusion layers 5 and 6. Moreover, in order for the gas diffusion layers 5 and 6 to have drainability, a water-repellent polymer typified by a fluorocarbon resin may be dispersed within the gas diffusion layers 5 and 6. Furthermore, in order for the gas diffusion layers 5 and 6 to have electron conductivity, the gas diffusion layers 5 and 6 may be formed from an electron-conductive material such as carbon fibers, metal fibers, or fine carbon powder. Still further, a water-repellent carbon layer formed from a water-repellent polymer and carbon powder may be provided on a surface of each of the gas diffusion layers 5 and 6, the surface contacting a corresponding one of the catalyst layers.

For example, not carbon fibers but a porous member whose main components are electrically conductive particles and a polymer resin may be used as the base material of the gas diffusion layers 5 and 6.

For example, a carbon material such as graphite, carbon black, or activated carbon may be used as the material of the electrically conductive particles. Examples of the carbon black include acetylene black (AB), furnace black, KetjenBlack, and Vulcan. Any one of these materials may be used alone, or some of these materials may be used in combination. The raw material of the carbon material may be in any form such as powdery, fibrous, granular, etc.

Examples of the polymer resin include PTFE (polytetrafluoroethylene), FEP (tetrafluoroethylene/hexafluoropropylene copolymer), PVDF (polyvinylidene fluoride), ETFE (tetrafluoroethylene/ethylene copolymer), PCTFE (polychlorotrifluoroethylene), and PFA (tetrafluoroethylene/perfluoroalkyl vinyl ether copolymer). PTFE is preferred in terms of thermal resistance, water-repellent property, and chemical resistance. Although the raw material of PTFE may be in the form of dispersion or powder, it is preferably in the form of dispersion from the standpoint of workability. It should be noted that the polymer resin serves as a binder for binding electrically conductive particles together. Since the polymer resin is water-repellent, the polymer resin also serves to retain water within the fuel cell system (i.e., water retentivity).

The gas diffusion layers 5 and 6 may contain not only the electrically conductive particles and the polymer resin but also a trace amount of, for example, a surfactant and a dispersion solvent used in the fabrication of the cathode gas diffusion layer. Examples of the dispersion solvent include water, alcohols such as methanol and ethanol, and glycols such as ethylene glycol. Examples of the surfactant include non-ionic surfactants such as polyoxyethylene alkyl ethers and zwitterionic surfactants such as alkylamine oxides. The amount of dispersion solvent and the amount of surfactant used in the fabrication of the gas diffusion layers may be suitably set in accordance with, for example, the type of the electrically conductive particles, the type of the polymer resin, and the compounding ratio of these. Generally speaking, the more the amount of dispersion solvent and surfactant, the more easily the polymer resin (fluorocarbon resin) and the electrically conductive particles (carbon) are dispersed uniformly, which, however, increases fluidity and tends to result in an increased difficulty in forming a sheet. It should be noted that the cathode gas diffusion layer may contain other materials (e.g., short carbon fibers) in addition to the electrically conductive particles, the polymer resin, the surfactant, and the dispersion solvent.

The first gas diffusion layer 5 and the second gas diffusion layer 6 may be either gas diffusion layers of the same structure or gas diffusion layers of different structures.

If carbon fibers are not used as the base material of the gas diffusion layers, then such a gas diffusion layer is fabricated in the following manner: a mixture containing the polymer resin and the electrically conductive particles is kneaded, pushed out, rolled out, and then calcined. Specifically, the electrically conductive carbon particles, the dispersion solvent, and the surfactant are fed into an agitator mixer, and then kneaded, crushed, and granulated so that the carbon is dispersed within the dispersion solvent. Then, the fluorocarbon resin, which is a polymer resin, is additionally fed into the agitator mixer, and the mixture is further agitated and kneaded so that the carbon and the fluorocarbon resin are dispersed. The kneaded mixture thus obtained is rolled out into a sheet and then calcined to remove the dispersion solvent and the surfactant. In this manner, a sheet used to form a cathode gas diffusion layer is fabricated. Then, grooves serving as channels for an oxidizing gas (one of the reaction gases) are formed in a main surface of the fabricated sheet by a suitable method (e.g., by shaping using a press machine or the like, or by cutting using a cutting machine or the like). As a result, the cathode gas diffusion layer is obtained. It should be noted that the surfactant to be used may be suitably selected in accordance with the material (carbon material) of the electrically conductive particles and the type of the dispersion solvent. Alternatively, the use of the surfactant may be eliminated.

Each of the first separator 7 and the second separator 8 is substantially rectangular. The first separator 7 and the second separator 8 are opposed to each other with the polymer electrolyte membrane 1 interposed between them. When seen in the thickness direction, the peripheral portions of the separators are positioned outward from the peripheral portion of the polymer electrolyte membrane 1. The first separator 7 is disposed outside the first gas diffusion layer 5 (i.e., when seen in the perpendicular direction, disposed at the opposite side to the polymer electrolyte membrane 1 with respect to the first gas diffusion layer 5 which is interposed between the first separator 7 and the polymer electrolyte membrane 1). The second separator 8 is disposed outside the second gas diffusion layer 6 (i.e., when seen in the perpendicular direction, disposed at the opposite side to the polymer electrolyte membrane 1 with respect to the first gas diffusion layer 5 which is interposed between the second separator 8 and the polymer electrolyte membrane 1).

The first separator 7 and the second separator 8 are plate-shaped electrically conductive components serving to mechanically fix the membrane-electrode assembly and serially and electrically connect adjacent membrane-electrode assemblies together.

Reaction gas channels 12A are formed in one main surface of a pair of main surfaces of the separator 7, the one main surface (a front surface, which may be hereinafter referred to as an electrode surface) contacting the membrane-electrode assembly. Similarly, reaction gas channels 12B are formed in one main surface of a pair of main surfaces of the separator 8, the one main surface (a front surface, which may be hereinafter referred to as an electrode surface) contacting the membrane-electrode assembly. Accordingly, reaction gases can be supplied to the respective electrode surfaces, and water produced due to a reaction and surplus gas can be taken away. It should be noted that the reaction gas channels may be provided not in the separators 7 and 8, but in other components. In such a case, the reaction gas channels 12A and 12B are not provided in the separators 7 and 8.

Cooling fluid channels 13A for a cooling fluid such as water or an antifreezing fluid are formed in the other main surface of the pair of main surfaces of the separator 7, the other main surface (a back surface, which may be hereinafter referred to as a cooling surface) being the opposite surface to the electrode surface. Similarly, cooling fluid channels 13B for the cooling fluid such as water or an antifreezing fluid are formed in the other main surface of the pair of main surfaces of the separator 8, the other main surface (a back surface, which may be hereinafter referred to as a cooling surface) being the opposite surface to the electrode surface. Accordingly, heat that is generated when electric power generation occurs in the membrane-electrode assembly can be removed. It should be noted that the cooling fluid channels 13A and 13B may be provided not in the separators 7 and 8, but in other components. In such a case, the cooling fluid channels 13A and 13B are not provided in the separators 7 and 8. Two groups of manifold holes are formed in the peripheral portions of the separators 7 and 8. One group of manifold holes include: two reaction gas manifold holes 21A and 22A through which the reaction gases are supplied or discharged; and one cooling fluid manifold hole 23A through which the cooing fluid is supplied or discharged. The other group of manifold holes include: two reaction gas manifold holes 21B and 22B through which the reaction gases are supplied or discharged; and one cooing fluid manifold hole 23B through which the cooing fluid is supplied or discharged.

A pair of reaction gas manifold holes 21A and 21B are used for one reaction gas (fuel gas or oxidizing gas). One of the manifold holes 21A and 21B is used for supplying of the gas, and the other is used for discharging of the gas. One of the reaction gas channels 12A and 12B is formed in the electrode surface of one of the first separator 7 and the second separator 8 so as to connect these manifold holes. A pair of reaction gas manifold holes 22A and 22B are used for the other reaction gas (oxidizing gas or fuel gas). One of the reaction gas manifold holes 22A and 22B is used for supplying of the gas, and the other is used for discharging of the gas. The other of the reaction gas channels 12A and 12B is formed in the electrode surface of the other of the first separator 7 and the second separator 8 so as to connect these manifold holes.

A pair of cooling fluid manifold holes 23A and 23B are used in such a manner that one of the cooling fluid manifold holes 23A and 23B is used for supplying of the cooling fluid, and the other is used for discharging of the cooling fluid. The cooling fluid channels 13A and 13B are formed as necessary in such a manner that cooling fluid channels are formed in the cooling surface(s) of the first separator 7 and/or the second separator 8 so as to connect these manifold holes.

Holes (not shown) corresponding to the six respective manifold holes 21A, 21B, 22A, 22B, 23A, and 23B of the first separator 7 and the second separator 8 are formed in the polymer electrolyte membrane 1 of the catalyst coated membrane 4. These holes are connected to form six manifolds (internal manifolds). Among these six manifolds, one reaction gas supply manifold is supplied with one reaction gas; the one reaction gas is discharged from one reaction gas discharge manifold; the other reaction gas supply manifold is supplied with the other reaction gas; the other reaction gas is discharged from the other reaction gas discharge manifold; a cooing fluid supply manifold is supplied with the cooing fluid; and the cooing fluid is discharged from a cooing fluid discharge manifold. The six manifold holes 21A, 21B, 22A, 22B, 23A, and 23B may be arranged in any manner.

The separators 7 and 8 are formed by using a carbon-containing material or a metal-containing material, for example. In a case where the separators 7 and 8 are formed by using a carbon-containing material, the separators 7 and 8 can be formed in the following manner: raw material powder in which carbon powder and a resin binder are mixed is fed into a mold; and then pressure and heat are applied to the raw material powder fed into the mold.

In a case where the separators 7 and 8 are formed by using a metal-containing material, the separators 7 and 8 may be formed of metal plates. A titanium plate whose surface is gold-plated, or a stainless steel plate whose surface is gold-plated, may be used as the separators 7 and 8.

It should be noted that a sealing material 14 is disposed in the cooling surface of the first separator 7 for the purpose of preventing the cooing fluid from leaking to the outside, preventing the pair of reaction gases from leaking to each other, and preventing the reaction gases from leaking to the outside.

The sealing structure 9 includes a first gasket portion 9a and a second gasket portion 9b. The first gasket portion 9a is substantially rectangular ring-shaped (see particularly Fig. 2). The first gasket portion 9a is, when seen in the thickness direction, positioned outward of the peripheral portion of the first gas diffusion layer 5, and when seen in the perpendicular direction, positioned between the first separator 7 and the peripheral portion of the polymer electrolyte membrane 1 or between the first separator 7 and the first catalyst layer 2 positioned at the peripheral portion of the polymer electrolyte membrane 1. This will be described below in detail. Fig. 1 shows the first gasket portion 9a being positioned between the first separator 7 and the first catalyst layer 2 positioned at the peripheral portion of the polymer electrolyte membrane 1. The second gasket portion 9b is substantially rectangular ring-shaped (see particularly Fig. 2). The second gasket portion 9b is, when seen in the thickness direction, positioned outward of the peripheral portion of the polymer electrolyte membrane 1, and when seen in the perpendicular direction, positioned between the first separator 7 and the second separator 8.

The first gasket portion 9a and the second gasket portion 9b have a sealing function, such that each gasket portion seals a gap between components that sandwich the gasket portion. The first gasket portion 9a and the second gasket portion 9b have moderate elasticity and strength for exerting the sealing function.

The sealing structure 9 may be configured such that the first gasket portion 9a and the second gasket portion 9b are separate individual components, or such that the first gasket portion 9a and the second gasket portion 9b are two connected portions of a single component.

Hereinafter, an example is given where the sealing structure 9 is configured such that the first gasket portion 9a and the second gasket portion 9b are two connected portions of a single component. Specifically, the sealing structure 9 is configured as a single frame-like gasket which includes: the first gasket portion 9a; the second gasket portion 9b; and a first connecting portion 9c connecting the first gasket portion 9a and the second gasket portion 9b. The frame-like gasket (9) is formed such that, when seen as a whole, the frame-like gasket (9) is a rectangular flat plate having an opening at its center, and each edge (9a, 9c) adjacent to the opening is made thin such that a step is formed. The reaction gas channels of the first separator 7 are positioned at the central opening, and holes corresponding to the respective manifold holes 21A to 23B of the first separator 7 are formed through the peripheral portion of the frame-like gasket. The second gasket portion 9b of the frame-like gasket prevents reaction gas leakage from the first gas diffusion layer 5 to the outside.

The frame-like gasket (9) may be formed of, for example, fluorine rubber, polyisoprene, butyl rubber, ethylene-propylene rubber, silicone rubber, nitrile rubber, thermoplastic elastomer, liquid crystal polymer, polyimide resin, polyether ether ketone resin, polyetherimide resin, polyphenylene sulfide resin, terephthalamide resin, polyether sulphone resin, polysulphone resin, syndiotactic polystyrene resin, polymethylpentene resin, modified polyphenylene ether resin, polyacetal resin, polypropylene resin, fluorocarbon resin, or polyethylene terephthalate resin. Any one of the above materials alone, or a complex of two or more kinds of the above materials, may be used as the frame-like gasket (9).

The swellable resin portion 11 is, when seen in the perpendicular direction, positioned between the first gasket portion 9a and the first catalyst layer 2 positioned at the peripheral portion of the polymer electrolyte membrane 1.

Although it is preferred that the swellable resin portion 11 is disposed along the entire peripheral portion of the polymer electrolyte membrane 1, the swellable resin portion 11 may be formed between the first gasket portion 9a and a part of the first catalyst layer 2 positioned at the peripheral portion of the polymer electrolyte membrane 1.

Preferably, the swellable resin portion 11 is in contact with the first catalyst layer 2 positioned at the peripheral portion of the polymer electrolyte membrane 1. More preferably, the swellable resin portion 11 is in contact with the first gasket portion 9a.

When seen in the thickness direction, there are portions where the edge of the polymer electrolyte membrane 1 coincides with the edge of the first catalyst layer 2. Preferably, the swellable resin portion 11 is disposed on the first catalyst layer 2 at portions corresponding to such coincident edges. More preferably, the swellable resin portion 11 is disposed on the first catalyst layer 2 in a belt-like manner along the coincident edges.

Preferably, the swellable resin portion 11 is disposed over an entire portion where the polymer electrolyte membrane 1 and the first gasket portion 9a overlap when seen in the thickness direction.

The swellable resin portion 11 may be formed as an independent component, or may be integrally formed with the first catalyst layer 2 or with the first gasket portion 9a.

The swellable resin portion 11 is formed of a swellable resin. The swellable resin has such a property that the volume of the swellable resin expands when water is added thereto (i.e., the volume expands in accordance with an increase in moisture content). Examples of the swellable resin include: starch-based resins such as acrylonitrile graft polymers, acrylic acid graft copolymers, and acrylamide graft polymers; cellulosic resins such as cellulose-acrylonitrile graft polymers and cross-linked carboxymethylcellulose; polysaccharides such as hyaluronic acid; polyvinyl alcohol-based resins such as cross-linked polyvinyl alcohol and polyvinyl alcohol hydrogel frozen/thawed elastomers; acrylic acid-based resins such as sodium acrylate/vinyl alcohol copolymers and cross-linked sodium polyacrylate; acrylamide-based resins such as cross-linked N-substituted acrylamides; fluorine-based sulfonic acid resins; and hydrocarbon-based sulfonic acid resins. For example, the swellable resin may be formed of substantially the same material as that of the polymer electrolyte membrane 1. The swellable resin may be formed of a fluorine-based resin containing a hydrophilic group which is a sulfonic group, or may be formed of a hydrocarbon-based resin containing a hydrophilic group which is a sulfonic group.

During the operation of the fuel cell, the swellable resin portion 11 suppresses cross leakage (C leak) of the reaction gases between the anode and the cathode. Specifically, during the operation of the fuel cell, the reaction gases are humidified, and also, moisture is produced as a result of the reaction gases reacting with each other. The swellable resin serving as the swellable resin portion 11 absorbs the moisture. Accordingly, the volume of the swellable resin expands. As a result, a gap between the first catalyst layer 2 and the first gasket portion 9a, which is formed due to irregularity of the surface of the first catalyst layer 2, is sealed. Since the swellable resin allows almost no reaction gas to pass through, the reaction gas leakage through the surface of the first catalyst layer 2 is suppressed.

In the example of Fig. 1, a gap 10 exists between the catalyst coated membrane 4 and the sealing structure 9 when seen in the perpendicular direction. The gap 10 includes both an intentionally formed gap and an unintentionally formed gap. In other words, the gap 10 includes both a gap that has been formed as designed and a gap that is not a designed gap but has been formed in the course of fabrication of the polymer electrolyte fuel cell 100. The gap 10 may be a fine gap. Preferably, the gap 10 is an enclosed space. The existence of the gap 10 is not essential.

In Embodiment 1, the gap 10 is defined at least by the first catalyst layer 2, the second catalyst layer 3, the polymer electrolyte membrane 1, the sealing structure 9, and the swellable resin portion 11. Here, the sealing structure 9 is configured as a frame-like gasket. Accordingly, the gap 10 is defined at least by the first catalyst layer 2, the second catalyst layer 3, the polymer electrolyte membrane 1, and the sealing structure (frame-like gasket) 9. More specifically, the gap 10 is defined by the first catalyst layer 2, the second catalyst layer 3, the polymer electrolyte membrane 1, the sealing structure 9, the second gas diffusion layer 6, the second separator 8, and the swellable resin portion 11.

### <Manner of Forming Catalyst Layers>

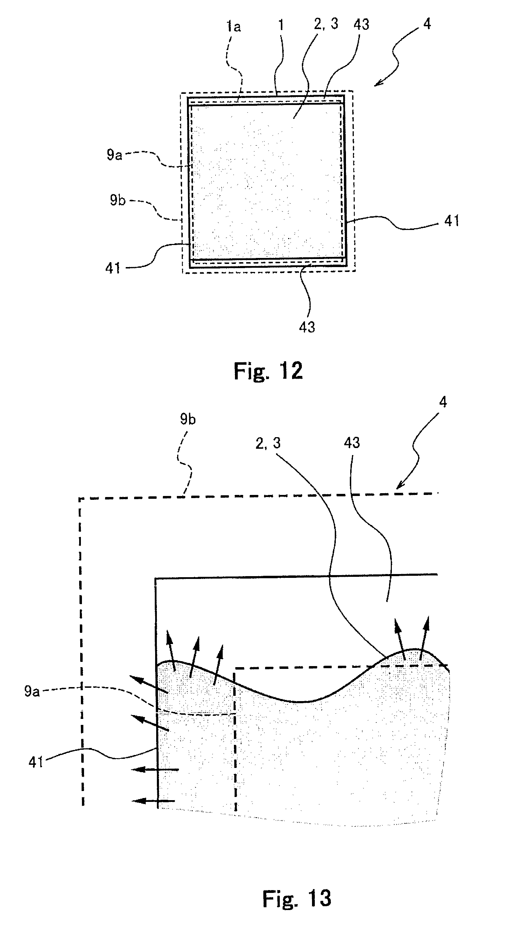

Fig. 12 is a plan view showing an example of a manner in which the catalyst layers of the catalyst coated membrane 4 are formed. In Fig. 12, outer rectangular dashed lines indicate the inner edges (inner periphery) of the second gasket portion 9b of the sealing structure 9, and inner rectangular dashed lines indicate the inner edges (inner periphery) of the first gasket portion 9a of the sealing structure 9.

As shown in Fig. 12, in the catalyst coated membrane 4, the first catalyst layer 2 and the second catalyst layer 3 extend so as to cover the peripheral portion (here, peripheral edges) of the polymer electrolyte membrane 1, for example, at one pair of two opposite sides 41 among the four sides of the polymer electrolyte membrane 1 (such that edges of the catalyst layers and the polymer electrolyte membrane coincide with each other when seen in the thickness direction). The first catalyst layer 2 and the second catalyst layer 3 are provided such that margins 43 are left at the peripheral portion of the polymer electrolyte membrane 1 at the other pair of two opposite sides of the polymer electrolyte membrane 1.

In relation to the catalyst coated membrane 4 thus formed, the second gasket portion 9b of the sealing structure 9 (frame-like gasket) is positioned around the polymer electrolyte membrane 1. Meanwhile, the first gasket portion 9a of the sealing structure 9 (frame-like gasket) is positioned over the first catalyst layer 2 at the one pair of two opposite sides 41 of the polymer electrolyte membrane 1, and is positioned over the margins (i.e., over the polymer electrolyte membrane 1) 43 of the peripheral portion of the polymer electrolyte membrane 1 at the other pair of two opposite sides of the polymer electrolyte membrane 1. This corresponds to the above description "first gasket portion 9a is...positioned between the first separator 7 and the peripheral portion of the polymer electrolyte membrane 1 or between the first separator 7 and the first catalyst layer 2 positioned at the peripheral portion of the polymer electrolyte membrane 1". In this configuration, "C leak" does not occur at the other pair of two opposite sides of the polymer electrolyte membrane 1 as mentioned in (Findings on Which the Present Invention is Based). As described below, at the one pair of two opposite sides of the polymer electrolyte membrane 1, "C leak" is prevented by the swellable resin which is disposed so as to be in contact with the catalyst layer.

Fig. 13 is a plan view showing an example of a manner in which edges of the first catalyst layer 2 and the second catalyst layer 3 are formed at a side of the polymer electrolyte membrane 1 of the catalyst coated membrane 4, the side having the margin 43. As shown in Fig. 13, when seen in the thickness direction, edges of the first catalyst layer 2 and the second catalyst layer 3 are not necessarily formed in a straight-line shape but in a wavy (irregular) shape. Generally speaking, as shown in Fig. 12, the first gasket portion 9a of the sealing structure 9 is disposed to be spaced apart from the wavy edges of the first catalyst layer 2 and the second catalyst layer 3. In such a case, "C leak" does not occur. However, "C leak" occurs if the first gasket portion 9a of the sealing structure 9 is disposed such that the first gasket portion 9a is positioned partially over the wavy edges of the first catalyst layer 2 and the second catalyst layer 3 as shown in Fig. 13. Therefore, in such a case, it is preferred that the swellable resin, which is disposed so as to be in contact with the catalyst layer, is provided at the sides of the polymer electrolyte membrane 1 of the catalyst coated membrane 4, the sides having the margins 43.

<Manner of Cutting Out Catalyst Coated Membrane 4>

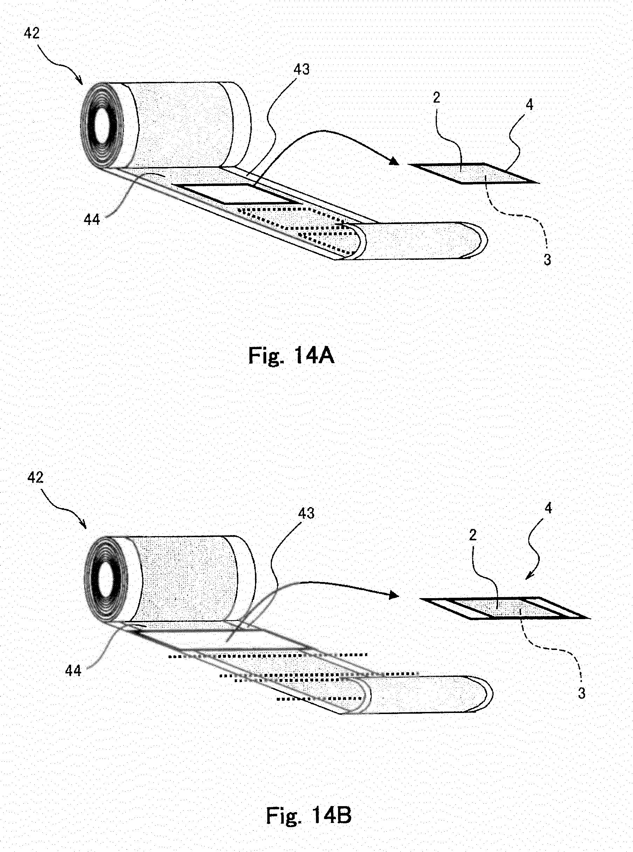

Figs. 14A and 14B are perspective views each schematically showing an example of the manner of cutting out a piece of catalyst coated membrane 4 from an elongated catalyst coated membrane fabricated through a roll to roll process.

As shown in Figs. 14A and 14B, in general, an elongated catalyst coated membrane 42 fabricated through a roll to roll process is such that a catalyst layer 44 is formed on both surfaces of the membrane 42 with strip-shaped margins 43 left at both sides. The catalyst coated membrane 42 thus fabricated is rolled up. Then, a substantially rectangular piece of catalyst coated membrane 4 is cut out from the roll of elongated catalyst coated membrane 42. In the cutting out step, as shown in Fig. 14A, only the catalyst layers 44 may be punched out of the elongated catalyst coated membrane 42, and thereby the catalyst coated membrane 4 that includes only the catalyst layers 44 may be cut out. Alternatively, as shown in Fig. 14B, the elongated catalyst coated membrane 42 may be cut in the width direction, and thereby the catalyst coated membrane 4 that includes the catalyst layers 44 and the margins 43 may be cut out. In the former case, the first catalyst layer 2 and the second catalyst layer 3 in the catalyst coated membrane 4 extend so as to cover the peripheral portion of the polymer electrolyte membrane 1 at the four sides of the polymer electrolyte membrane 1 when seen in the thickness direction. Therefore, it is necessary to provide swellable resin portions corresponding to the respective four sides of the polymer electrolyte membrane 1. On the other hand, in the latter case, the first catalyst layer 2 and the second catalyst layer 3 in the catalyst coated membrane 4 extend so as to cover the peripheral portion of the polymer electrolyte membrane 1 at two opposite sides of the polymer electrolyte membrane 1 when seen in the thickness direction. Therefore, it is necessary to provide swellable resin portions corresponding to at least the respective two sides of the polymer electrolyte membrane 1. It is understood that Embodiment 1 is applicable to the catalyst coated membrane 4 in which the first catalyst layer 2 and the second catalyst layer 3 extend so as to cover the peripheral portion of the polymer electrolyte membrane 1 at one side of the polymer electrolyte membrane 1 when seen in the thickness direction, and also applicable to the catalyst coated membrane 4 that is fabricated without using a roll to roll process.

### [Fabrication Method]

Preferably, the method of fabricating the polymer electrolyte fuel cell 100 according to the present embodiment includes a disposing step of, in the catalyst coated membrane which includes at least the polymer electrolyte membrane 1 and the first catalyst layer 2, disposing the swellable resin on the first catalyst layer 2 positioned at the peripheral portion of the polymer electrolyte membrane 1.

More preferably, the method includes a heating step performed after the disposing step. The heating step is a step of heating at least the peripheral portion of the catalyst coated membrane, on which peripheral portion the swellable resin is disposed, and the heating in the heating step is performed at such a temperature as to soften the swellable resin but not to decompose the polymer electrolyte contained in the polymer electrolyte membrane 1.

Specifically, assume a case where the material of the polymer electrolyte membrane 1 is Nafion (registered trademark); the first catalyst layer 2 contains Nafion (registered trademark) as a polymer electrolyte material; and the material of the swellable resin is Nafion (registered trademark). In this case, it is preferred to set the heating temperature to be not lower than 90 degrees Celsius and not higher than 200 degrees Celsius. It should be noted that the heating can be performed, for example, by a method in which a material to be heated is sandwiched by a plate-shaped jig and heat-treated by using a press machine or the like, or by a method in which a material to be heated is put in a drying oven and heat-treated.

Other than the above-described methods, well-known methods can be used to fabricate the polymer electrolyte fuel cell 100. Therefore, a detailed description regarding the fabrication method is omitted.

### [Operation]

Next, operations of the polymer electrolyte fuel cell 100 configured as above are described. When the polymer electrolyte fuel cell 100 performs a power generation operation, a pair of reaction gases (fuel gas and oxidizing gas) are supplied from the outside. Accordingly, power generation portions (anode and cathode) of each cell generate electric power and heat. Meanwhile, a cooling fluid is supplied from the outside, and thereby the temperature of the power generation portions of each cell is maintained at predetermined operating temperatures (e.g., not lower than 50 °C and not higher than 90 °C). When moisture contained in the reaction gases and moisture produced as a result of the reaction gases reacting with each other are added to the swellable resin, the volume of the swellable resin expands, and thereby the gap between the first catalyst layer 2 and the first gasket portion 9a is sealed. The diffusion coefficient of gas molecules in the swellable resin is smaller than the diffusion coefficient of gas molecules in the air. Accordingly, gas molecules are less easily dispersed in the swellable resin than in the air. Therefore, "C leak" is effectively prevented when the gap between the first catalyst layer 2 and the first gasket portion 9a, the gap acting as a passage for "C leak", is sealed by the swellable resin.

Next, a variation of Embodiment 1 is described. It should be noted that, for the sake of convenience, variations of all the embodiments are denoted by common serial numbers.

### [Variation 1]

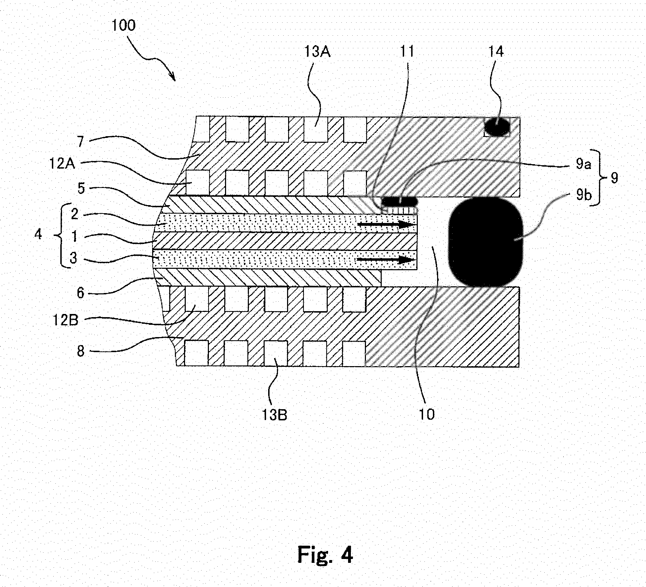

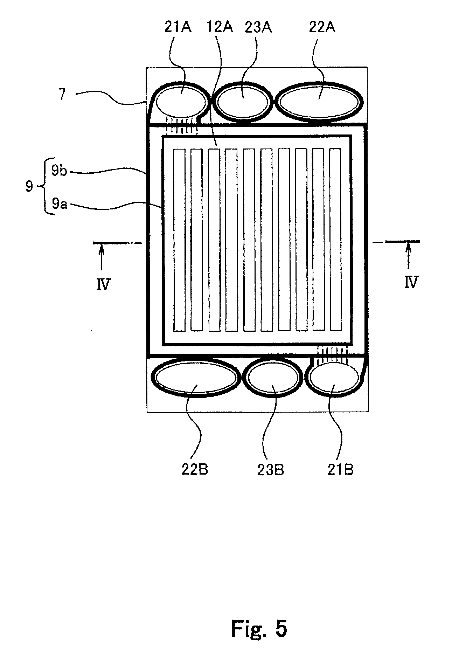

Fig. 4 is a cross-sectional view showing an example of a schematic configuration of a main part of a polymer electrolyte fuel cell according to Variation 1 of Embodiment 1. Fig. 5 is a front view showing an example of a first separator of the polymer electrolyte fuel cell of Fig. 4. Fig. 4 shows a cross section along line IV-IV of Fig. 5. Except for the configuration described below, the polymer electrolyte fuel cell 100 according to Variation 1 is configured in the same manner as the polymer electrolyte fuel cell 100 according to Embodiment 1.

As shown in Fig. 4 and Fig. 5, in Variation 1, the sealing structure 9 is configured such that the first gasket portion 9a and the second gasket portion 9b are separate individual components. In other words, in Variation 1, the sealing structure 9 includes a first gasket configured as the first gasket portion 9a and a second gasket configured as the second gasket portion 9b. The first gasket is substantially rectangular ring-shaped. The first gasket is positioned outward of the peripheral portion of the first gas diffusion layer 5 when seen in the thickness direction, and is positioned between the first separator 7 and the peripheral portion of the polymer electrolyte membrane 1 or between the first separator 7 and the first catalyst layer 2 positioned at the peripheral portion of the polymer electrolyte membrane 1. The second gasket is substantially rectangular ring-shaped. The second gasket is, when seen in the thickness direction, positioned outward of the peripheral portion of the polymer electrolyte membrane 1, and is positioned between the first separator 7 and the second separator 8. Specifically, the first gasket (9a) is provided such that the reaction gas channels of the first separator 7 are positioned at the opening of the first gasket (9a). The second gasket (9b) is provided so as to surround the first gasket (9a) and the manifold holes 21A to 23B of the first separator 7.

The gaskets in Variation 1 may be formed of the same material as that of the gaskets in Embodiment 1.

As with the configuration in Fig. 1, the swellable resin portion 11 is, when seen in the perpendicular direction, disposed between the first gasket portion 9a and the first catalyst layer 2 positioned at the peripheral portion of the polymer electrolyte membrane 1.

The gap 10 is defined at least by the first catalyst layer 2, the second catalyst layer 3, the polymer electrolyte membrane 1, the first gasket (9a), the first separator 7, the second gasket (9b), and the swellable resin portion 11. More specifically, the gap 10 is defined by the first catalyst layer 2, the second catalyst layer 3, the polymer electrolyte membrane 1, the first gasket (9a), the first separator 7, the second gasket (9b), the second separator 8, the second gas diffusion layer 6, and the swellable resin portion 11.

Variation 1 provides the same operational advantages as those provided by Embodiment 1.

### (Embodiment 2)

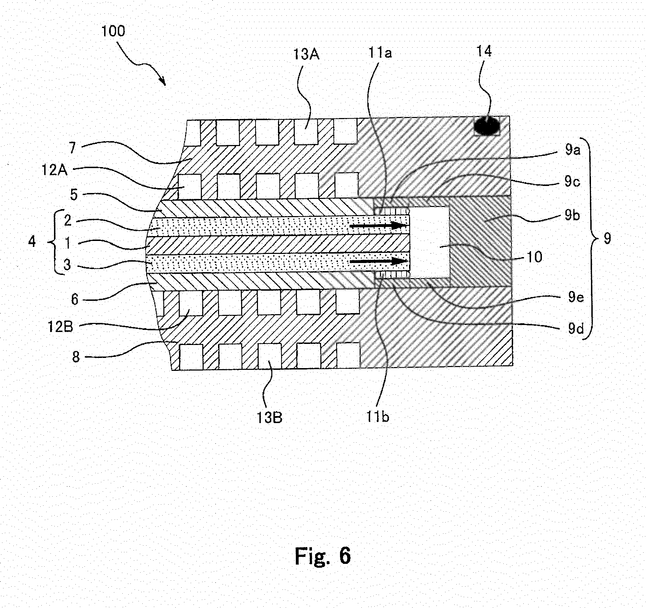

Fig. 6 is a cross-sectional view showing an example of a schematic configuration of a main part of a polymer electrolyte fuel cell according to Embodiment 2 of the present invention. Except for the configuration described below, the polymer electrolyte fuel cell 100 according to Embodiment 2 is configured in the same manner as the polymer electrolyte fuel cell 100 according to Embodiment 1.

As shown in Fig. 6, in Embodiment 2, the sealing structure 9 further includes a third gasket portion 9d. The third gasket portion 9d is substantially rectangular ring-shaped. The third gasket portion 9d is positioned outward of the peripheral portion of the second gas diffusion layer 6 when seen in the thickness direction, and is positioned between the second separator 8 and the peripheral portion of the polymer electrolyte membrane 1 or between the second separator 8 and the second catalyst layer 3 positioned at the peripheral portion of the polymer electrolyte membrane 1. The function, placement, and material of the third gasket portion 9d are the same as those of the first gasket portion 9a.

The sealing structure 9 may be configured such that the first gasket portion 9a, the second gasket portion 9b, and the third gasket portion 9d are separate individual components, or such that the first gasket portion 9a, the second gasket portion 9b, and the third gasket portion 9d are three connected portions of a single component.

Here, the sealing structure 9 is configured such that the first gasket portion 9a, the second gasket portion 9b, and the third gasket portion 9d are three connected portions of a single component. Specifically, the sealing structure 9 is configured as a single frame-like gasket which includes: the first gasket portion 9a; the second gasket portion 9b; the first connecting portion 9c connecting the first gasket portion 9a and the second gasket portion 9b; the third gasket portion 9d; and a second connecting portion 9e connecting the third gasket portion 9d and the second gasket portion 9b. For example, a membrane-electrode assembly (MEA) may be configured such that the first gas diffusion layer 5 and the second gas diffusion layer 6 are provided on the catalyst coated membrane 4, and such that the peripheral portion of the catalyst coated membrane 4 is sandwiched by the frame-like gasket (9). The membrane-electrode assembly thus formed can be easily handled by holding the frame-like gasket (9).

The present embodiment includes a first swellable resin portion 11a and a second swellable resin portion 11b instead of the swellable resin portion 11 of Embodiment 1. The first swellable resin portion 11a is, when seen in the perpendicular direction, disposed between the first gasket portion 9a and the first catalyst layer 2 positioned at the peripheral portion of the polymer electrolyte membrane 1. The second swellable resin portion 11b is, when seen in the perpendicular direction, disposed between the third gasket portion 9d and the second catalyst layer 3 positioned at the peripheral portion of the polymer electrolyte membrane 1.

The same variations as those of the swellable resin portion 11 according to Embodiment 1 are applicable to the first swellable resin portion 11a and the second swellable resin portion 11b.

Specifically, although it is preferred that the first swellable resin portion 11a and/or the second swellable resin portion 11b are disposed along the entire peripheral portion of the polymer electrolyte membrane 1, the first swellable resin portion 11a may be formed between the first gasket portion 9a and a part of the first catalyst layer 2 positioned at the peripheral portion of the polymer electrolyte membrane 1, and the second swellable resin portion 11b may be formed between the third gasket portion 9d and a part of the second catalyst layer 3 positioned at the peripheral portion of the polymer electrolyte membrane 1.

Preferably, the first swellable resin portion 11a is in contact with the first catalyst layer 2 positioned at the peripheral portion of the polymer electrolyte membrane 1, and/or the second swellable resin portion 11b is in contact with the second catalyst layer 3 positioned at the peripheral portion of the polymer electrolyte membrane 1. More preferably, the swellable resin portion 11 is in contact with the first gasket portion 9a and/or the third gasket portion 9d.

When seen in the thickness direction, there are portions where the edge of the polymer electrolyte membrane 1 coincides with the edge of the first catalyst layer 2. Preferably, the first swellable resin portion 11a is disposed on the first catalyst layer 2 at portions corresponding to such coincident edges. More preferably, the first swellable resin portion 11a is disposed on the first catalyst layer 2 in a belt-like manner along the coincident edges.

When seen in the thickness direction, there are portions where the edge of the polymer electrolyte membrane 1 coincides with the edge of the second catalyst layer 3. Preferably, the second swellable resin portion 11b is disposed on the second catalyst layer 3 at portions corresponding to such coincident edges. More preferably, the second swellable resin portion 11b is disposed on the second catalyst layer 3 in a belt-like manner along the coincident edges.

Preferably, the first swellable resin portion 11a is disposed over an entire portion where the polymer electrolyte membrane 1 and the first gasket portion 9a overlap when seen in the thickness direction.

Preferably, the second swellable resin portion 11b is disposed over an entire portion where the polymer electrolyte membrane 1 and the third gasket portion 9d overlap when seen in the thickness direction.

The first swellable resin portion 11a may be formed as an independent component, or may be integrally formed with the first catalyst layer 2 or with the first gasket portion 9a.

The second swellable resin portion 11b may be formed as an independent component, or may be integrally formed with the second catalyst layer 3 or with the third gasket portion 9d.

The first swellable resin portion 11a and/or the second swellable resin portion 11b may be formed of the same material as that of the swellable resin portion 11.

The gap 10 is defined at least by the first catalyst layer 2, the second catalyst layer 3, the polymer electrolyte membrane 1, and the sealing structure 9. Here, since the sealing structure 9 is configured as a single frame-like gasket, the gap 10 is defined by the first catalyst layer 2, the second catalyst layer 3, the polymer electrolyte membrane 1, the sealing structure 9 (frame-like gasket), the first swellable resin portion 11a, and the second swellable resin portion 11b. If, as mentioned above, the membrane-electrode assembly (MEA) is configured such that the peripheral portion of the catalyst coated membrane 4 is sandwiched by the frame-like gasket (9), then it is not necessary to incorporate the gap 10 into the design. However, when the polymer electrolyte fuel cell 100 is assembled by using the membrane-electrode assembly and then fastened by fasteners, the gap 10 is formed. Thus, in this case, the gap 10 is formed unintentionally.

According to Embodiment 2 with the above-described configuration, reaction gas leakage through the second catalyst layer 3 is prevented by the second swellable resin portion 11b. Therefore, "C leak" is further suppressed compared to Embodiment 1.

### [Variation 2]

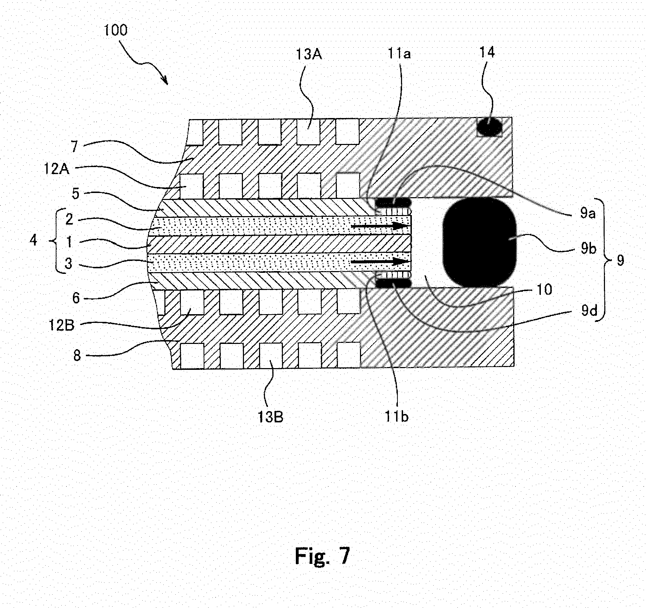

Fig. 7 is a cross-sectional view showing an example of a schematic configuration of a main part of a polymer electrolyte fuel cell according to Variation 2 of Embodiment 2. Except for the configuration described below, the polymer electrolyte fuel cell 100 according to Variation 2 is configured in the same manner as the polymer electrolyte fuel cell 100 according to Embodiment 2.

As shown in Fig. 7, in Variation 2, the sealing structure 9 is configured such that the first gasket portion 9a, the second gasket portion 9b, and the third gasket portion 9d are separate individual components. In other words, in Variation 2, the sealing structure 9 includes a first gasket configured as the first gasket portion 9a, a second gasket configured as the second gasket portion 9b, and a third gasket configured as the third gasket portion 9d. The first gasket is substantially rectangular ring-shaped. The first gasket is, when seen in the thickness direction, positioned outward of the peripheral portion of the first gas diffusion layer 5, and when seen in the perpendicular direction, positioned between the first separator 7 and the peripheral portion of the polymer electrolyte membrane 1 or between the first separator 7 and the first gas diffusion layer 5 positioned at the peripheral portion of the polymer electrolyte membrane 1. The second gasket is substantially rectangular ring-shaped. The second gasket is, when seen in the thickness direction, positioned outward of the peripheral portion of the polymer electrolyte membrane 1, and when seen in the perpendicular direction, positioned between the first separator 7 and the second separator 8. The third gasket is substantially rectangular ring-shaped. The third gasket is, when seen in the thickness direction, positioned outward of the peripheral portion of the second gas diffusion layer 6, and when seen in the perpendicular direction, positioned between the second separator 8 and the peripheral portion of the polymer electrolyte membrane 1 or between the second separator 8 and the second catalyst layer 3 positioned at the peripheral portion of the polymer electrolyte membrane 1.

As with the configuration in Fig. 6, the first swellable resin portion 11a is, when seen in the perpendicular direction, disposed between the first gasket portion 9a and the first catalyst layer 2 positioned at the peripheral portion of the polymer electrolyte membrane 1, and the second swellable resin portion 11b is, when seen in the perpendicular direction, disposed between the third gasket portion 9d and the second catalyst layer 3 positioned at the peripheral portion of the polymer electrolyte membrane 1.

The gap 10 is defined by the first catalyst layer 2, the second catalyst layer 3, the polymer electrolyte membrane 1, the first gasket (9a), the first separator 7, the second gasket (9b), the second separator 8, the third gasket (9d), the first swellable resin portion 11a, and the first swellable resin portion 11ab.

Variation 2 provides the same operational advantages as those provided by Embodiment 2.

### [Variation 3]

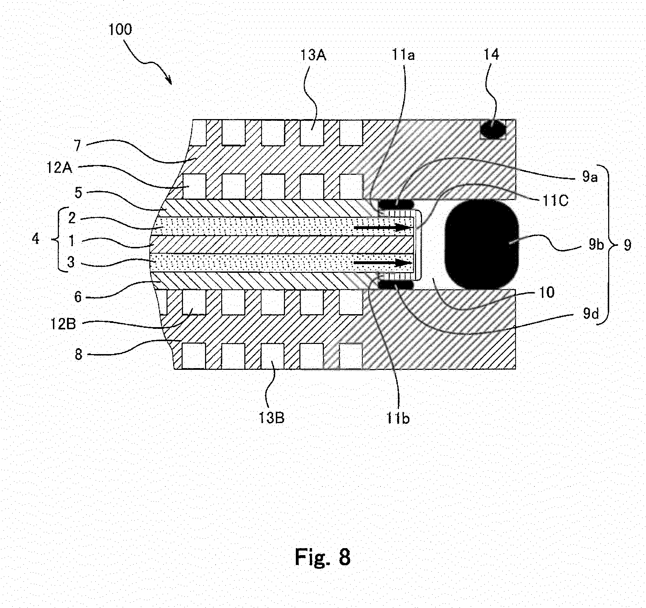

Fig. 8 is a cross-sectional view showing an example of a schematic configuration of a main part of a polymer electrolyte fuel cell according to Variation 3 of Embodiment 2. Except for the configuration described below, the polymer electrolyte fuel cell 100 according to Variation 2 is configured in the same manner as the polymer electrolyte fuel cell according to Variation 2.

As shown in Fig. 8, Variation 3 includes a third swellable resin portion 11c formed of a swellable resin whose volume expands when water is added thereto. When seen in the perpendicular direction, the third swellable resin portion 11c covers the edge of the first catalyst layer 2, the edge of the polymer electrolyte membrane 1, and the edge of the second catalyst layer 3. The first swellable resin portion 11a, the second swellable resin portion 11b, and the third swellable resin portion 11c are integrally formed together. That is, the first swellable resin portion 11a, the second swellable resin portion 11b, and the third swellable resin portion 11c collectively serve as a single swellable resin portion, and are disposed so as to wrap the peripheral portion of the catalyst coated membrane 4.

The swellable resin portion in the above-described shape can be formed, for example, by affixing a film-like swellable resin to the edge of the catalyst coated membrane 4 in a manner to wrap the edge.

A gap may be formed between the third swellable resin portion 11c and the end faces of the catalyst coated membrane 4. However, it is preferred that no gap is formed between the third swellable resin portion 11c and the end faces of the catalyst coated membrane 4.

The configuration of the sealing structure 9 shown in Fig. 8 is the same as that of the sealing structure 9 according to Variation 2 (Fig. 7). However, the configuration of the sealing structure 9 according to Variation 3 may be the same as, for example, the configuration of the sealing structure 9 according to any of Embodiment 2 (Fig. 6), Embodiment 1 (Fig. 1), and Variation 1 (Fig. 4).

Variation 3 provides the same operational advantages as those provided by Embodiment 2. Further, according to Variation 3, reaction gas leakage through the end faces of the first catalyst layer 2 and/or the second catalyst layer 3 is suppressed by the third swellable resin portion 11c. Accordingly, C leak can be suppressed more effectively.

### [Variation 4]

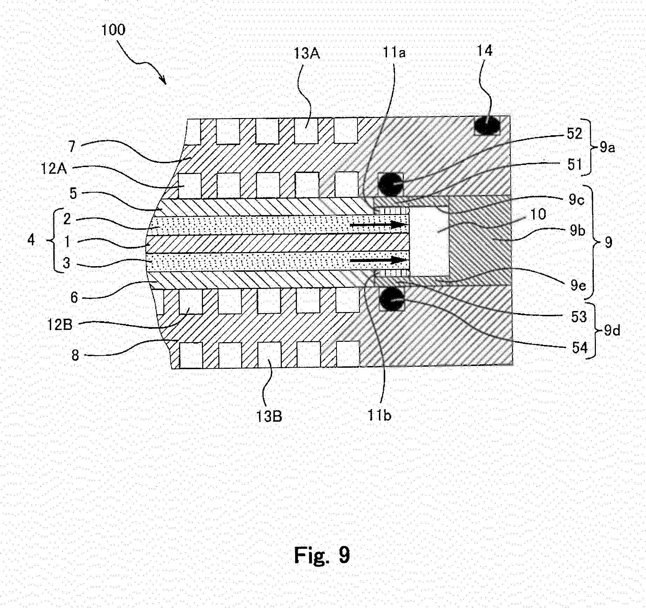

Fig. 9 is a cross-sectional view showing an example of a schematic configuration of a main part of a polymer electrolyte fuel cell according to Variation 4 of Embodiment 2. Except for the configuration described below, the polymer electrolyte fuel cell 100 according to Variation 4 is configured in the same manner as the polymer electrolyte fuel cell according to Embodiment 2.

As shown in Fig. 9, in Variation 4, an O-ring sealing material 52 is disposed to be in contact with a distal end portion 51 of the frame-like gasket, the distal end portion 51 being positioned between the first catalyst layer 2 and the first separator 7. The sealing material 52 is disposed in a groove formed in a portion of the first separator 7, the portion corresponding to the distal end portion 51 of the frame-like gasket. The distal end portion 51 of the frame-like gasket and the sealing material 52 form the first gasket portion 9a of the sealing structure 9.

Similarly, an O-ring sealing material 54 is disposed to be in contact with a distal end portion 53 of the frame-like gasket, the distal end portion 53 being positioned between the second catalyst layer 3 and the second separator 8. The sealing material 54 is disposed in a groove formed in a portion of the second separator 8, the portion corresponding to the distal end portion 53 of the frame-like gasket. The distal end portion 53 of the frame-like gasket and the sealing material 54 form the third gasket portion 9d of the sealing structure 9.

Variation 4 with the above configuration provides the same operational advantages as those provided by Embodiment 2.

As with Variation 3, Variation 4 may include the third swellable resin portion 11c formed of a swellable resin whose volume expands when water is added thereto. The third swellable resin portion 11c covers the edge of the first catalyst layer 2, the edge of the polymer electrolyte membrane 1, and the edge of the second catalyst layer 3 when seen in the perpendicular direction. The first swellable resin portion 11a, the second swellable resin portion 11b, and the third swellable resin portion 11c may be integrally formed together.

### [Variation 5]

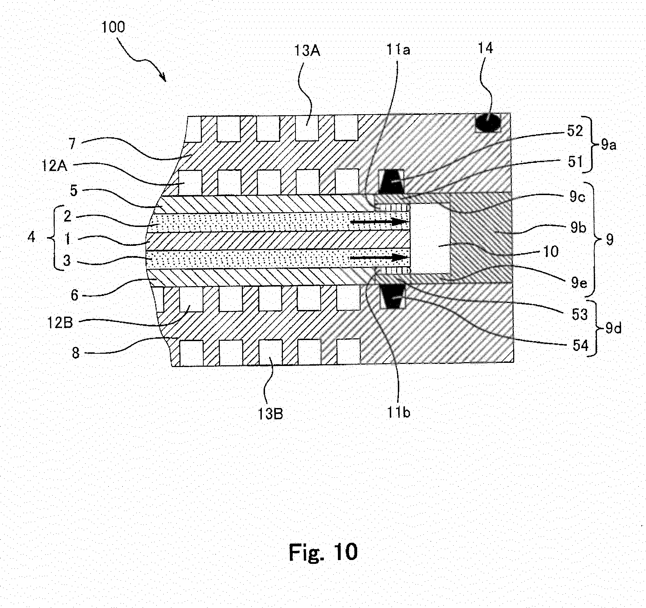

Fig. 10 is a cross-sectional view showing an example of a schematic configuration of a main part of a polymer electrolyte fuel cell according to Variation 5 of Embodiment 2. Except for the configuration described below, the polymer electrolyte fuel cell 100 according to Variation 5 is configured in the same manner as the polymer electrolyte fuel cell according to Variation 4 of Embodiment 2.

As shown in Fig. 10, in Variation 5, each of the O-ring sealing materials 52 and 54 is formed to have a trapezoidal cross section. The O-ring sealing materials 52 and 54 are bonded and fixed to the respective distal end portions 51 and 53 of the frame-like gasket of the first separator 7.

Variation 5 with the above configuration provides the same operational advantages as those provided by Embodiment 2.

As with Variation 3, Variation 5 may include the third swellable resin portion 11c formed of a swellable resin whose volume expands when water is added thereto. The third swellable resin portion 11c covers the edge of the first catalyst layer 2, the edge of the polymer electrolyte membrane 1, and the edge of the second catalyst layer 3 when seen in the perpendicular direction. The first swellable resin portion 11a, the second swellable resin portion 11b, and the third swellable resin portion 11c may be integrally formed together.

### [Experiment Example 1]

In Experiment Example 1, the fluorine release rate in the conventional example shown in Fig. 15 was measured.

Catalyst supporting carbon (TEC10E50E available from Tanaka Kikinzoku Kogyo K.K., containing 50 mass % of Pt) in which carbon powder supports platinum particles serving as an electrocatalyst, and a polymer electrolyte solution (Flemion available from Asahi Glass Co., Ltd.) having hydrogen ion conductivity, were dispersed into a dispersion medium which was a mixture of ethanol and water (mass ratio of 1:1), and thereby a cathode catalyst layer forming ink was prepared. It should be noted that the polymer electrolyte was added such that the mass of the polymer electrolyte in a catalyst layer formed through application of the ink was 0.4 times of the mass of the catalyst supporting carbon. The cathode catalyst layer forming ink thus obtained was applied by a spraying method onto one of the surfaces of a polymer electrolyte membrane (GSII available from Japan Gore-Tex Inc., 200 mm x 200 mm), and thereby a cathode catalyst layer having a monolayer structure with a platinum loading amount of 0.6 mg/cm² was formed. When the ink was applied for forming the catalyst layer, a substrate (PET) previously punched to have an opening of 140 mm x 140 mm was used as a mask to define the area of application.

Next, catalyst supporting carbon (TEC61E54 available from Tanaka Kikinzoku Kogyo K.K., containing 50 mass % of Pt-Ru alloy) in which carbon powder supports platinum-ruthenium alloy particles (platinum : ruthenium = 1 : 1.5 in molar ratio (substance amount ratio)) serving as an electrocatalyst, and a polymer electrolyte solution (Flemion available from Asahi Glass Co., Ltd.) having hydrogen ion conductivity, were dispersed into a dispersion medium which was a mixture of ethanol and water (mass ratio of 1:1), and thereby an anode catalyst layer forming ink was prepared.

The anode catalyst layer forming ink thus obtained was applied by a spraying method onto the other surface of the polymer electrolyte membrane, the other surface being the opposite surface to the surface on which the cathode catalyst layer had been formed, and thereby an anode catalyst layer having a monolayer structure with a platinum loading amount of 0.35 mg/cm² was formed.

Here, the shape and usage of a mask were the same as those of the mask used at the time of forming the above-described cathode catalyst layer. Next, the catalyst coated membrane obtained in the above-described manner was heat-treated (120 °C, 30 minutes) by using a hot press machine, and thereafter punched out into a size of 80 mm x 80 mm, so that the catalyst coated membrane in which the catalyst layers were provided all over the surfaces of the electrolyte membrane was obtained.

Next, in order to form a gas diffusion layer, carbon cloth (SK-1 available from Mitsubishi Chemical Corporation) in a size of 16 cm x 20 cm with a thickness of 270 µm was impregnated with a fluorocarbon resin-containing aqueous dispersion (ND-1 available from Daikin Industries, Ltd.), and then dried to impart water repellency to the carbon cloth (water repellent treatment).

Subsequently, a water-repellent carbon layer was formed on one surface (entire surface) of the water repellent-treated carbon cloth. Electrically conductive carbon powder (DENKA BLACK (product name) available from Denki Kagaku Kogyo Kabushiki Kaisha), and an aqueous solution in which fine powder of polytetrafluoroethylene (PTFE) is dispersed (D-1 available from Daikin Industries, Ltd.), were mixed and thereby a water-repellent carbon layer forming ink was prepared. The water-repellent carbon layer forming ink was applied onto the one surface of the water repellent-treated carbon cloth by a doctor blade method to form a water-repellent carbon layer. At the time, the water-repellent carbon layer was partially embedded into the carbon cloth.

Thereafter, the water repellent-treated carbon cloth on which the water-repellent carbon layer had been formed was calcined for 30 minutes at 350 °C not lower than the melting point of PTFE. Finally, the central portion of the carbon cloth was cut out by a punching die, and thereby a gas diffusion layer in a size of 60 mm x 60 mm was obtained.

Next, the catalyst coated membrane was sandwiched by two gas diffusion layers obtained in the above-described manner, such that the central portion of the water-repellent carbon layer of each gas diffusion layer was in contact with a corresponding one of the cathode catalyst layer and the anode catalyst layer, and was then entirely subjected to thermocompression bonding (102 °C, 30 minutes, 10 kgf/cm²) by a hot press machine. In this manner, a membrane-electrode assembly was obtained.

Finally, a single cell was fabricated by using the membrane-electrode assembly obtained in the above-described manner. The membrane-electrode assembly was sandwiched by a separator having gas channels for use in fuel gas supply and a separator having gas channels for use in oxidizing gas supply; fluorine rubber gaskets were arranged between the separators so as to surround the cathode and the anode; and thus a single cell (single-cell battery A) with an effective electrode (anode or cathode) area of 36 cm² was obtained.

Operating conditions were set as shown in Table 1 of Fig. 18A. Water discharged from the battery was analyzed by ion chromatography, and the quantity of fluorine ions in the water discharged from the battery was determined. In this manner, the fluorine release rate (FRR, [µg/cm²/day]) was measured.

The results of Experiment Example 1 indicated that the fluorine release rate when 100 hours were elapsed after the start of the operation of the battery was 28 [µg/cm²/day].

### [Experiment Example 2]

In Experiment Example 2, the fluorine release rate was measured regarding the variation shown in Fig. 7.

In Experiment Example 2, a single cell (single-cell battery B) was formed, which was the same as the single cell of Experiment Example 1 except that swellable resin portions (the first swellable resin portion 11a and the second swellable resin portion 11b) were arranged such that one swellable resin portion was positioned between the cathode and the gasket disposed around the cathode and the other swellable resin portion was positioned between the anode and the gasket disposed around the anode. A polymer electrolyte membrane with a thickness of approximately 20 µm, which had been obtained by casting a polymer electrolyte solution (Flemion available from Asahi Glass Co., Ltd.) onto a polypropylene substrate and then drying it at room temperature, was used for the first swellable resin portion 11a and the second swellable resin portion 11b. The first swellable resin portion 11a and the second swellable resin portion 11b were formed as separate components and disposed on the first catalyst layer 2 and the second catalyst layer 3, respectively. When seen in the thickness direction, the first swellable resin portion 11a and the second swellable resin portion 11b were rectangular frame-shaped and the width of each swellable resin portion was approximately 5 mm. The first swellable resin portion 11a and the second swellable resin portion 11b were formed in the following manner: the resin in a rectangular shape was disposed at four sides of the catalyst coated membrane on the anode side and at four sides of the catalyst coated membrane on the cathode side; and then heat treated by a hot press machine for 30 minutes at 120 °C).

Since the operating conditions and measurement conditions in Experiment Example 2 are the same as in Experiment Example 1, a description thereof will be omitted.

The results of Experiment Example 2 indicated that the fluorine release rate when 100 hours were elapsed after the start of the operation of the battery was 0.3 [µg/cm²/day]. This value is approximately one-tenth of the value obtained in Experiment Example 1. That is, it has been found that C leak of the reaction gases is significantly reduced by installing the swellable resin portions 11.

### [Experiment Example 3]

In Experiment Example 3, the fluorine release rate was measured regarding the variation shown in Fig. 8.

Other than the configuration of the swellable resin portion, the materials and experiment method used in Experiment Example 3 were the same as those described in Experiment Example 2.

A polymer electrolyte membrane with a thickness of approximately 20 µm, which had been obtained by casting a polymer electrolyte solution (Flemion available from Asahi Glass Co., Ltd.) onto a polypropylene substrate and then drying it at room temperature, was cut into pieces each having a size of approximately 20 mm x 80 mm. Then, the pieces of polymer electrolyte membrane were arranged so as to wrap the respective sides (four sides in total) of a previously obtained unheat-treated catalyst coated membrane having a size of 80 mm x 80 mm; and then subjected to heat treatment under the same conditions (120 °C, 30 minutes) as the heat treatment conditions of the above-described catalyst coated membrane.

The results of Experiment Example 3 indicated that the fluorine release rate when 100 hours were elapsed after the start of the operation was 0.08 [µg/cm²/day].

This value is approximately one thirty-fifth of the value obtained in Experiment Example 1 and approximately one-fourth of the value obtained in Experiment Example 2. That is, it has been found that C leak of the reaction gases is further reduced by adopting, in addition to the configuration of Experiment Example 2, the following features: including the third swellable resin portion 11c which covers the edge of the first catalyst layer 2, the edge of the polymer electrolyte membrane 1, and the edge of the second catalyst layer 3 when seen in the perpendicular direction; and integrally forming the first swellable resin portion 11a, the second swellable resin portion 11b, and the third swellable resin portion 11c together.

### (Embodiment 3)

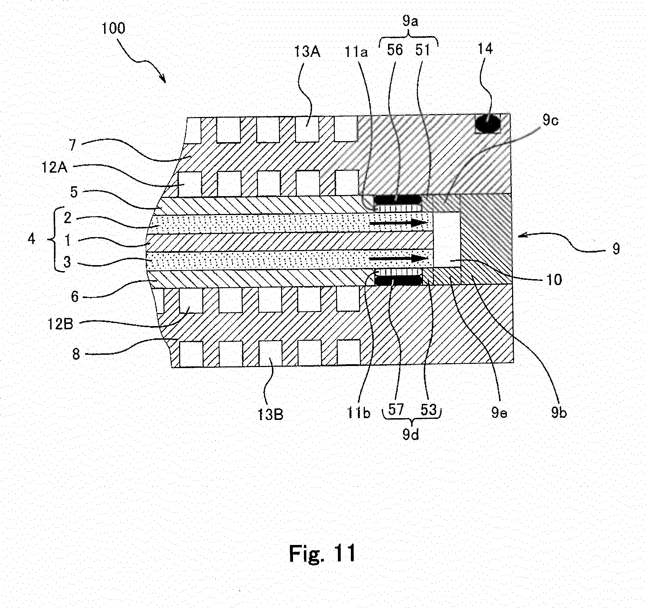

Fig. 11 is a cross-sectional view showing an example of a schematic configuration of a main part of a polymer electrolyte fuel cell according to Embodiment 3.

As shown in Fig. 11, the polymer electrolyte fuel cell 100 according to Embodiment 3 is configured in the same manner as the polymer electrolyte fuel cell 100 according to Embodiment 2 except for the sealing structure 9, the first swellable resin portion 11a, and the second swellable resin portion 11b.

An O-ring sealing material 56 is disposed between the distal end portion 51 of the frame-like gasket and the edge of the first gas diffusion layer 5. The sealing material 56 and the distal end portion 51 of the frame-like gasket form the first gasket portion 9a of the sealing structure 9. When seen in the perpendicular direction, the first swellable resin portion 11a is disposed between the peripheral portion of the first catalyst layer 2 and the sealing material 56.

Similarly, an O-ring sealing material 57 is disposed between the distal end portion 53 of the frame-like gasket and the edge of the second gas diffusion layer 6. The sealing material 57 and the distal end portion 53 of the frame-like gasket form the third gasket portion 9d of the sealing structure 9. When seen in the perpendicular direction, the second swellable resin portion 11b is disposed between the peripheral portion of the second catalyst layer 3 and the sealing material 57.

Embodiment 3 with the above-described configuration provides the same operational advantages as those provided by Embodiment 2.

It should be noted that Embodiment 3 may include the third swellable resin portion 11c which covers the edge of the first catalyst layer 2, the edge of the polymer electrolyte membrane 1, and the edge of the second catalyst layer 3 when seen in the perpendicular direction, and the first swellable resin portion 11a, the second swellable resin portion 11b, and the third swellable resin portion 11c may be integrally formed together. With such a configuration, reaction gas leakage through the end faces of the first catalyst layer 2 and/or the second catalyst layer 3 is suppressed by the third swellable resin portion 11c in a manner similar to Variation 3. Accordingly, C leak can be suppressed more effectively.

### (Other Variations)

The above embodiments have been described by taking as an example an internal manifold type, in which the separators 7 provided with the manifold holes for the fuel gas, oxidizing gas, and cooling water are stacked, and thereby the manifolds for supplying the fuel gas, oxidizing gas, and cooling water are formed. However, the above embodiments are similarly applicable to a so-called external manifold type, in which the manifolds for supplying the fuel gas, oxidizing gas, and cooling water are provided at the side faces of the stack. With such application, the same advantageous effects can be obtained.

Alternatively, in the configurations described in the above embodiments, the separator 7 may be formed from a porous conductive material, and the pressure of the cooling water flowing through the cooling fluid channels 13A and 13B may be made higher than the pressure of the reaction gases flowing through the reaction gas channels 12A and 12B so as to cause part of the cooling water to pass through the separator to the electrode surface side, so that the polymer electrolyte membrane 1 is humidified. That is, a so-called internally-humidified type may be adopted.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention.

### Industrial Applicability

The solid polymer fuel cell and the fabrication method thereof according to the present invention are capable of suppressing a decrease in the efficiency of reaction gas utilization, and the present invention is applicable to fuel cells using a solid polymer electrolyte membrane, and particularly to, for example, stationary cogeneration systems and electric automobiles.

### Reference Signs List

- 1: polymer electrolyte membrane
- 1a: first main surface
- 1b: second main surface
- 2: first catalyst layer
- 3: second catalyst layer
- 4: catalyst coated membrane
- 5: first gas diffusion layer
- 6: second gas diffusion layer
- 7: first separator
- 8: second separator
- 9: sealing structure
- 9a: first gasket portion
- 9b: second gasket portion
- 9c: first connecting portion
- 9d: third gasket portion
- 9e: second connecting portion
- 10: gap
- 11: swellable resin portion
- 11a: first swellable resin portion
- 11b: second swellable resin portion
- 11c: third swellable resin portion
- 12A: reaction gas channel
- 12B: reaction gas channel
- 13A: cooing fluid channel
- 13B: cooing fluid channel
- 14: sealing material
- 21A: reaction gas manifold hole
- 21B: reaction gas manifold hole
- 22A: reaction gas manifold hole
- 22B: reaction gas manifold hole
- 23A: cooing fluid manifold hole
- 23B: cooing fluid manifold hole
- 41: one pair of two opposite sides
- 42: elongated catalyst coated membrane
- 43: margin
- 44: catalyst layer
- 51: distal end portion
- 52: sealing material
- 53: distal end portion
- 54: sealing material
- 56: sealing material
- 57: sealing material
- 61: inner gasket
- 62: outer gasket
- 100: polymer electrolyte fuel cell

## Claims

1. A polymer electrolyte fuel cell comprising:
a substantially rectangular polymer electrolyte membrane with a pair of first and second main surfaces;
a substantially rectangular first catalyst layer facing the first main surface, the first catalyst layer extending so as to cover a peripheral portion of the polymer electrolyte membrane at, at least, one side of the polymer electrolyte membrane when seen in a thickness direction of the polymer electrolyte membrane;
a substantially rectangular second catalyst layer facing the second main surface;
a substantially rectangular first gas diffusion layer which is, when seen in a perpendicular direction to the thickness direction, positioned at an opposite side to the polymer electrolyte membrane with respect to the first catalyst layer which is interposed between the first gas diffusion layer and the polymer electrolyte membrane, and when seen in the thickness direction, extends so as to cover a portion of the first catalyst layer, the portion extending inward from a peripheral portion of the first catalyst layer;
a substantially rectangular second gas diffusion layer which is, when seen in the perpendicular direction, positioned at an opposite side to the polymer electrolyte membrane with respect to the second catalyst layer which is interposed between the second gas diffusion layer and the polymer electrolyte membrane, and when seen in the thickness direction, extends so as to cover a portion of the second catalyst layer, the portion extending inward from a peripheral portion of the second catalyst layer;
a substantially rectangular first separator disposed such that, when seen in the perpendicular direction, the first separator is positioned at an opposite side to the polymer electrolyte membrane with respect to the first gas diffusion layer which is interposed between the first separator and the polymer electrolyte membrane, and a peripheral portion of the first separator is positioned outward of the peripheral portion of the polymer electrolyte membrane when seen in the thickness direction;
a substantially rectangular second separator disposed such that, when seen in the perpendicular direction, the second separator is positioned at an opposite side to the polymer electrolyte membrane with respect to the second gas diffusion layer which is interposed between the second separator and the polymer electrolyte membrane, and a peripheral portion of the second separator is positioned outward of the peripheral portion of the polymer electrolyte membrane when seen in the thickness direction;
a sealing structure including a first gasket portion and a second gasket portion,
the first gasket portion being substantially rectangular ring-shaped and, when seen in the thickness direction, positioned outward of a peripheral portion of the first gas diffusion layer, and when seen in the perpendicular direction, positioned between the first separator and the peripheral portion of the polymer electrolyte membrane or between the first separator and the first catalyst layer positioned at the peripheral portion of the polymer electrolyte membrane,
the second gasket portion being substantially rectangular ring-shaped and, when seen in the thickness direction, positioned outward of the peripheral portion of the polymer electrolyte membrane, and when seen in the perpendicular direction, positioned between the first separator and the second separator; and
a first swellable resin portion formed of a swellable resin whose volume expands when water is added thereto, the first swellable resin portion being, when seen in the perpendicular direction, positioned between the first gasket portion and the first catalyst layer positioned at the peripheral portion of the polymer electrolyte membrane.

2. The polymer electrolyte fuel cell according to claim 1, wherein
the sealing structure further includes a third gasket portion which is substantially rectangular ring-shaped and, when seen in the thickness direction, positioned outward of a peripheral portion of the second gas diffusion layer, and when seen in the perpendicular direction, positioned between the second separator and the peripheral portion of the polymer electrolyte membrane or between the second separator and the second catalyst layer positioned at the peripheral portion of the polymer electrolyte membrane,
the polymer electrolyte fuel cell comprising a second swellable resin portion formed of a swellable resin whose volume expands when water is added thereto, the second swellable resin portion being, when seen in the perpendicular direction, positioned between the third gasket portion and the second catalyst layer positioned at the peripheral portion of the polymer electrolyte membrane.

3. The polymer electrolyte fuel cell according to claim 2, comprising a third swellable resin portion formed of a swellable resin whose volume expands when water is added thereto, the third swellable resin portion covering an edge of the first catalyst layer, an edge of the polymer electrolyte membrane, and an edge of the second catalyst layer when seen in the perpendicular direction, wherein
the first swellable resin portion, the second swellable resin portion, and the third swellable resin portion are integrally formed together.

4. The polymer electrolyte fuel cell according to claims 1 to 3, wherein
the swellable resin contains at least one resin selected from the group consisting of starch-based resins, cellulosic resins, polysaccharides, polyvinyl alcohol-based resins, acrylic acid-based resins, acrylamide-based resins, fluorine-based sulfonic acid resins, and hydrocarbon-based sulfonic acid resins.

5. The polymer electrolyte fuel cell according to claims 1 to 3, wherein
the swellable resin contains at least one resin selected from the group consisting of acrylonitrile graft polymers, acrylic acid graft copolymers, acrylamide graft polymers, cellulose-acrylonitrile graft polymers, cross-linked carboxymethylcellulose, hyaluronic acid, cross-linked polyvinyl alcohol, polyvinyl alcohol hydrogel frozen/thawed elastomers, sodium acrylate/vinyl alcohol copolymers, cross-linked sodium polyacrylate, cross-linked N-substituted acrylamides, fluorine-based sulfonic acid resins, and hydrocarbon-based sulfonic acid resins.

6. The polymer electrolyte fuel cell according to any one of claims 1 to 5, wherein
the first catalyst layer and the second catalyst layer extend so as to cover the peripheral portion of the polymer electrolyte membrane at four sides, or at two opposite sides, of the polymer electrolyte membrane.

7. The polymer electrolyte fuel cell according to claim 1, wherein
the sealing structure includes:
a first gasket configured as the first gasket portion, which is substantially rectangular ring-shaped and, when seen in the thickness direction, positioned outward of the peripheral portion of the first gas diffusion layer, and when seen in the perpendicular direction, positioned between the first separator and the peripheral portion of the polymer electrolyte membrane or between the first separator and the first catalyst layer positioned at the peripheral portion of the polymer electrolyte membrane; and
a second gasket configured as the second gasket portion, which is substantially rectangular ring-shaped and, when seen in the thickness direction, positioned outward of the peripheral portion of the polymer electrolyte membrane, and when seen in the perpendicular direction, positioned between the first separator and the second separator.

8. The polymer electrolyte fuel cell according to claim 7, wherein
the sealing structure further includes a third gasket configured as the third gasket portion, which is substantially rectangular ring-shaped and, when seen in the thickness direction, positioned outward of a peripheral portion of the second gas diffusion layer, and when seen in the perpendicular direction, positioned between the second separator and the peripheral portion of the polymer electrolyte membrane or between the second separator and the second catalyst layer positioned at the peripheral portion of the polymer electrolyte membrane.

9. The polymer electrolyte fuel cell according to claim 1, wherein
the sealing structure is configured as a single frame-like gasket including:
the first gasket portion which is substantially rectangular ring-shaped and, when seen in the thickness direction, positioned outward of the peripheral portion of the first gas diffusion layer, and when seen in the perpendicular direction, positioned between the first separator and the peripheral portion of the polymer electrolyte membrane or between the first separator and the first catalyst layer positioned at the peripheral portion of the polymer electrolyte membrane;
the second gasket portion which is substantially rectangular ring-shaped and, when seen in the thickness direction, positioned outward of the peripheral portion of the polymer electrolyte membrane, and when seen in the perpendicular direction, positioned between the first separator and the second separator; and
a first connecting portion connecting the first gasket portion and the second gasket portion.

10. The polymer electrolyte fuel cell according to claim 9, wherein
the frame-like gasket further includes:
the third gasket portion which is substantially rectangular ring-shaped and, when seen in the thickness direction, positioned outward of a peripheral portion of the second gas diffusion layer, and when seen in the perpendicular direction, positioned between the second separator and the peripheral portion of the polymer electrolyte membrane or between the second separator and the second catalyst layer positioned at the peripheral portion of the polymer electrolyte membrane; and
a second connecting portion connecting the third gasket portion and the second gasket portion.

11. A method of fabricating the polymer electrolyte fuel cell according to claim 1, the method comprising
in a catalyst coated membrane which includes the polymer electrolyte membrane and the first catalyst layer, disposing the swellable resin on the first catalyst layer positioned at the peripheral portion of the polymer electrolyte membrane.

12. The method of fabricating the polymer electrolyte fuel cell, according to claim 11, the method comprising, after the disposing, heating a peripheral portion of the catalyst coated membrane, on which peripheral portion at least the swellable resin is disposed, wherein
the heating is performed at such a temperature as to soften the swellable resin but not to decompose a polymer electrolyte contained in the polymer electrolyte membrane.
